# EUROPEAN PATENT APPLICATION

(11) **EP 4 567 326 A1**
(43) Date of publication of application: **11.06.2025**
(21) Application number: 22954033.1
(22) Date of filing: 04.08.2022
(51) Int. Cl.: F21V 33/00, H05B 47/105, H05B 47/155, H05B 47/16

(54) **ILLUMINATION DEVICE, INFORMATION PROCESSING DEVICE, INFORMATION PROCESSING SYSTEM, INFORMATION PROCESSING METHOD, AND RECORDING MEDIUM**

(71) Applicant: NEC Corporation, 108-8001 Tokyo (JP); NEC Platforms, Ltd., Kanagawa 213-8511 (JP)
(72) Inventor: OOMINE, Masahiro, Kawasaki-shi, Kanagawa 213-8511 (JP); SHIMADA, Daisuke, Kawasaki-shi, Kanagawa 213-8511 (JP); KAYAMA, Katsumi, Kawasaki-shi, Kanagawa 213-8511 (JP); KOMAMURA, Yuta, Kawasaki-shi, Kanagawa 213-8511 (JP)
(74) Representative: Betten & Resch
(86) International application number: PCT/JP2022/029974
(87) International publication number: WO 2024/029045

(57) **Abstract**

A lighting apparatus includes: a first illuminator that irradiates first light toward a first area; and a second illuminator that is disposed on one side in a predetermined direction from the first illumination unit and that irradiates second light toward a second area located on another side in the predetermined direction from the first area.

## Description

### Technical Field

This disclosure relates to technical fields of a lighting apparatus, an information processing apparatus, an information processing system, an information processing method, and a recording medium.

### Background Art

Patent Literature 1 discloses an authentication device including: a guiding mirror for confirming, when an object captures an image of his/her own eye, the position of the eye by a reflection image of the eye; a lens provided behind the guiding mirror; and illumination LEDs for emitting near-infrared light, the LEDs being arranged symmetrically about the optical axis of the lens and capable of individually emitting light by being switched. In the authentication device, a plurality of images of the eye of the object are captured for different application angles of illumination light emitted from the illumination LEDs to the eye, and based on the captured images, whether or not the captured images of the eye are originated from false eyes, is determined to perform iris authentication.

Patent Literature 2 discloses a lighting device that illuminates a predetermined illumination range on a road surface so as to illuminate a vehicle travelling on a road surface from a front side or a rear side along an advancing direction. The lighting device disclosed in Patent Literature 2 includes a light emitting part including a plurality of light source parts which are provided to illuminate each of a plurality of illumination sections included in the illumination range, being capable of adjusting illumination condition, independently and respectively.

Patent Literature 3 discloses a technique/technology including: an image pickup unit picking up an eye image of an authenticated person; a plurality of lighting devices illuminating an eye of the authenticated person and having different distances to the optical axis of the image pickup unit; and a control unit turning on the plurality of lighting devices in the order from the one closest to the optical axis, analyzing an image captured by the image pickup unit when each of them is turned on, and capturing the image of the eye of the authenticated person illuminated by a lighting device whose reflected light of the illumination does not overlap the eye image. This configuration enables acquisition of the eye image from the front of the authenticated person.

### Citation List

### Patent Literature

Patent Literature 1: International Publication No. WO2006/088042
Patent Literature 2: JP2015-225764A
Patent Literature 3: JP2005-304809A

### Summary

### Technical Problem

It is an example object of this disclosure to provide a lighting apparatus, an information processing apparatus, an information processing system, an information processing method, and a recording medium that aim to improve the techniques/technologies disclosed in Citation List.

### Solution to Problem

A lighting apparatus according to an example aspect includes: a first illuminator that irradiates first light toward a first area; and a second illuminator that is disposed on one side in a predetermined direction from the first illumination unit and that irradiates second light toward a second area located on another side in the predetermined direction from the first area.

An information processing apparatus according to an example aspect includes: a position information acquisition unit that acquires position information indicating a position of a target; and an illumination control unit that controls a first illumination unit that is configured to irradiate first light toward a first area, such that the first illumination unit illuminates the target with the first light, in response to the target being located on one side in a predetermined direction from a predetermined position, and controls a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

An information processing system according to an example aspect includes: an imaging unit that captures an image of a target passing through a passageway; a lighting apparatus that illuminates the target with illumination light, the lighting apparatus including a first illumination unit that irradiates first light toward a first area, and a second illumination unit that is disposed on one side in a predetermined direction from the first illumination unit and that irradiates second light toward a second area located on another side in the predetermined direction from the first area; and a gate provided in the passageway, the gate being opened and closed based on an authentication result of the target based on an image capture result by the imaging unit.

An information processing method according to an example aspect includes: acquiring position information indicating a position of a target; controlling a first illumination unit that is configured to irradiate first light toward a first area, such that the first illumination unit illuminates the target with the first light, in response to the target being located on one side in a predetermined direction from a predetermined position; and controlling a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

A recording medium according to an example aspect is a recording medium on which a computer program that allows a computer to execute an information processing method is recorded, the information processing method including: acquiring position information indicating a position of a target; controlling a first illumination unit that is configured to irradiate first light toward a first area, such that the first illumination unit illuminates the target with the first light, in response to the target being located on one side in a predetermined direction from a predetermined position; and controlling a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

### Brief Description of Drawings

[FIG. 1] FIG. 1 is a cross-sectional view illustrating a configuration of an information processing system according to a first example embodiment.
[FIG. 2] FIG. 2 is a block diagram illustrating a configuration of an information processing apparatus according to the first example embodiment.
[FIG. 3] FIG. 3 is a cross-sectional view illustrating a configuration of an information processing system according to a second example embodiment.
[FIG. 4] FIG. 4 is a block diagram illustrating a configuration of an information processing apparatus according to the second example embodiment.
[FIG. 5] FIG. 5 is a flowchart illustrating a flow of an illumination control operation performed by the information processing apparatus according to the second example embodiment.
[FIG. 6] FIG. 6 is a cross-sectional view illustrating a modified example of the configuration of the information processing system according to the second example embodiment.
[FIG. 7A] FIG. 7A is a side view illustrating an arrangement example of element illuminators included in a lighting apparatus according to the second example embodiment.
[FIG. 7B] FIG. 7B is a side view illustrating an arrangement example of element illuminators included in a lighting apparatus according to the second example embodiment.
[FIG. 7C] FIG. 7C is a side view illustrating an arrangement example of element illuminators included in a lighting apparatus according to the second example embodiment.
[FIG. 8A] FIG. 8A is a front view illustrating an example of a configuration of a lighting apparatus according to a third example embodiment,
[FIG. 8B] FIG. 8B is a cross-sectional view illustrating an example of the configuration of the lighting apparatus according to the third example embodiment.
[FIG. 9] FIG. 9 is a block diagram illustrating a configuration of the information processing apparatus according to the third example embodiment.
[FIG. 10] FIG. 10 is a flowchart illustrating a flow of an illumination control operation performed by the information processing apparatus according to the third example embodiment.
[FIG. 11A] FIG. 11A is a schematic diagram of illumination control performed by the information processing apparatus according to the third example embodiment.
[FIG. 11B] FIG. 11B is a schematic diagram of illumination control performed by the information processing apparatus according to the third example embodiment.
[FIG. 11C] FIG. 11C is a schematic diagram of illumination control performed by the information processing apparatus according to the third example embodiment.
[FIG. 12A] FIG. 12A is a front view illustrating a modified example of the configuration of the lighting apparatus according to the third example embodiment.
[FIG. 12B] FIG. 12B is a front view illustrating a modified example of the configuration of the lighting apparatus according to the third example embodiment.
[FIG. 12C] FIG. 12C is a front view illustrating a modified example of the configuration of the lighting apparatus according to the third example embodiment.
[FIG. 13A] FIG. 13A is top views illustrating an arrangement example of the element illuminators included in the lighting apparatus according to the third example embodiment.
[FIG. 13B] FIG. 13B is top views illustrating an arrangement example of the element illuminators included in the lighting apparatus according to the third example embodiment.
[FIG. 14] FIG. 14 is a block diagram illustrating a configuration of an information processing system according to a fourth example embodiment.
[FIG. 15A] FIG. 15A is a top view illustrating an example of a configuration of a gate unit according to a fourth example embodiment.
[FIG. 15B] FIG. 15B is a perspective view illustrating an example of the configuration of the gate unit according to the fourth example embodiment.
[FIG. 16] FIG. 16 is a block diagram illustrating a configuration of an imaging unit according to the fourth example embodiment.
[FIG. 17] FIG. 17 is a perspective view illustrating an external appearance of the imaging unit according to the fourth example embodiment.
[FIG. 18] FIG. 18 is a cross-sectional view illustrating a cross section of the imaging unit according to the fourth example embodiment (especially, a cross section including a face camera, a display, and a housing/casing).
[FIG. 19] FIG. 19 is a cross-sectional view illustrating a cross section of the imaging unit according to the fourth example embodiment (especially, a cross section including an iris camera, a mirror, a display, and a housing).
[FIG. 20] FIG. 20 is a cross-sectional view illustrating an image capture range of the face camera and an image capture range of the iris camera.
[FIG. 21] FIG. 21 is a cross-sectional view illustrating the image capture range of the face camera and the image capture range of the iris camera.
[FIG. 22] FIG. 22 is a cross-sectional view illustrating a cross section of the imaging unit according to the fourth example embodiment (especially, a cross section including a rotating motor).
[FIG. 23] FIG. 23 is a block diagram illustrating a configuration of a control unit according to the fourth example embodiment.
[FIG. 24] FIG. 24 is a flowchart illustrating a flow of an authentication operation performed by the control unit according to the fourth example embodiment.
[FIG. 25] FIG. 25 is a plan view illustrating a gate unit with a first flapper gate in an open state.
[FIG. 26] FIG. 26 illustrates an example of a UI screen displayed on a display when the face camera captures a face of a target person.

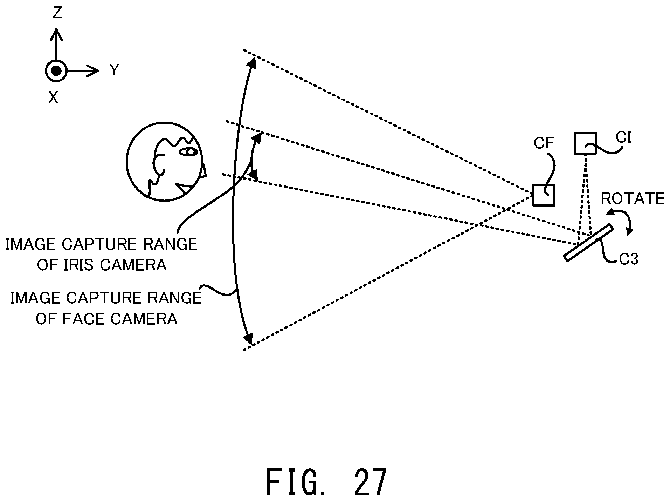

[FIG. 27] FIG. 27 is a cross-sectional view illustrating a positional relation between the image capture range of the iris camera and an eye of the target person.
[FIG. 28] FIG. 28 is a plan view illustrating a gate unit with a second flapper gate in the open state.
[FIG. 29] FIG. 29 illustrates an example of the UI screen displayed on the display when authentication of the target person is successful.
[FIG. 30] FIG.30 is a plan view illustrating a gate unit with the first and second flapper gates in a close state.
[FIG. 31] FIG. 31 illustrates an example of the UI screen displayed on the display when the authentication of the target person is failed.
[FIG. 32A] FIG. 32A is a front view illustrating a modified example of the configuration of the lighting apparatus according to the fourth example embodiment.
[FIG. 32B] FIG. 32B is a front view illustrating a modified example of the configuration of the lighting apparatus according to the fourth example embodiment.
[FIG. 33] FIG. 33 is a top view of a right lighting apparatus, a left lighting apparatus, and an imaging apparatus according to a fifth example embodiment.
[FIG. 34] FIG. 34 is a block diagram illustrating a configuration of a control unit according to the fifth example embodiment.
[FIG. 35] FIG. 35 is a flowchart illustrating a flow of a control operation performed by the control unit according to the fifth example embodiment.
[FIG. 36] FIG. 36 is a block diagram illustrating a configuration of a control unit according to a sixth example embodiment.
[FIG. 37] FIG. 37 is a flowchart illustrating a flow of a control operation performed by the control unit according to the sixth example embodiment.
[FIG. 38] FIG. 38 is a top view illustrating an example of a configuration of a gate unit according to a seventh example embodiment.
[FIG. 39] FIG. 39 is a block diagram illustrating a configuration of a control unit according to an eighth example embodiment.
[FIG. 40] FIG. 40 is a flowchart illustrating a flow of a control operation performed by the control unit according to the eighth example embodiment.
[FIG. 41] FIG. 41 is a block diagram illustrating a configuration of a control unit according to a ninth example embodiment.
[FIG. 42A] FIG. 42A is a front view illustrating an example of a configuration of a lighting apparatus according to the ninth example embodiment,.
[FIG. 42B] FIG. 42B is a side view illustrating an example of the configuration of the lighting apparatus according to the ninth example embodiment.
[FIG. 43] FIG. 43 is a flowchart illustrating a flow of a control operation performed by the control unit according to the ninth example embodiment.

### Description of Example Embodiments

With reference to the drawings, a lighting apparatus, an information processing apparatus, an information processing system, an information processing method, and a recording medium according to example embodiments will be described with reference to the drawings.

### First Example Embodiment]

A lighting apparatus, an information processing apparatus, an information processing method, and a recording medium according to a first example embodiment will be described. The following describes the lighting apparatus, the information processing apparatus, the information processing method, and the recording medium according to the first example embodiment, by using an information processing system SYS1 to which the lighting apparatus, the information processing apparatus, the information processing method, and the recording medium according to the first example embodiment are applied.

### Configuration of Information Processing System SYS1]

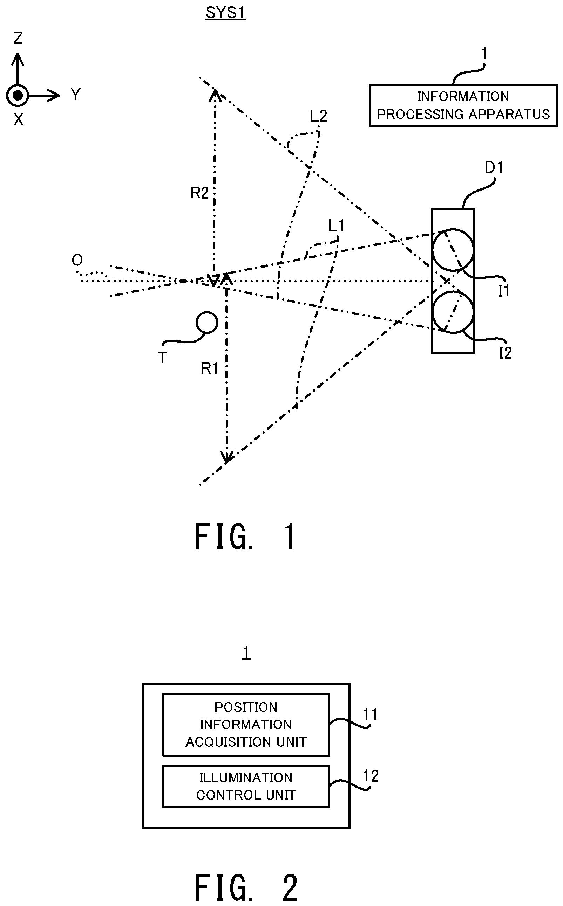

With reference to FIG. 1, a configuration of the information processing system SYS1 according to the first example embodiment will be described. FIG. 1 is a cross-sectional view illustrating the configuration of an information processing system SYS1 according to the first example embodiment.

As illustrated in FIG. 1, the information processing system SYS1 includes a lighting apparatus D1 and an information processing apparatus 1. The lighting apparatus D1 is configured to illuminate a target T with light L. The information processing apparatus 1 is configured to control the lighting apparatus D1.

The lighting apparatus D1 includes a first illuminator I1 and a second illuminator I2. The first illuminator I1 irradiates first light L1 as the light L toward a first area R1. The second illuminator I2 is disposed on one side in a predetermined direction from the first illuminator I1, and irradiates second light L2 as the light L toward a second area R2 located on the other side in the predetermined direction from the first area R1. In FIG. 1, the "predetermined direction" is a Z-axis direction, the "one side" is a -Z side, and the "other side" is a +Z side. That is, FIG. 1 illustrates an example in which the second illuminator I2 is disposed on the -Z side in the Z-axis direction from the first illuminator I1, and irradiates the second light L2 toward the second area R2 located on the +Z side in the Z-axis direction from the first area R1.

### Configuration of Information Processing Apparatus 1]

With reference to FIG. 2, a configuration of the information processing apparatus 1 according to the first example embodiment will be described. FIG. 2 is a block diagram illustrating the configuration of the information processing apparatus 1 according to the first example embodiment. As illustrated in FIG. 2, the information processing apparatus 1 includes a position information acquisition unit 11 and an illumination control unit 12.

The position information acquisition unit 11 acquires information indicating a position of the target T. When the target T is located on one side in a predetermined direction from a predetermined position O, the illumination control unit 12 controls the first illuminator I1 such that the first illuminator I1 illuminates the target T with the first light L1. When the target is located on the other side in the predetermined direction from the predetermined position O, the illumination control unit 12 controls the second illuminator I2 such that the second illuminator I2 illuminates the target T with the second light L2. For example, in the example illustrated in FIG. 1, when the target T is located on the -Z side in the Z-axis direction from the predetermined position O, the illumination control unit 12 may control the first illuminator I1 such that the first illuminator I1 illuminates the target T with the first light L1. For example, in the example illustrated in FIG. 1, when the target is located on the +Z side in the Z-axis direction from the predetermined position O, the illumination control unit 12 may control the second illuminator I2 such that the second illuminator I2 illuminates the target T with the second light L2.

### Technical Effect of Information Processing System SYS1]

In the information processing system SYS 1 according to the first example embodiment, each illuminator I has a different illumination direction, and each illuminator I is thus capable of illuminating a different area. This allows the information processing system SYS1 to properly illuminate the target T at various locations. Since the information processing system SYS1 determines an illumination area of the light L based on the position of the target T, the illumination area is narrowed and power saving may be realized. In addition, since the illumination area of the information processing system SYS 1 is narrowed, it is possible to prevent that the lighting apparatus D1 is highly heated.

### Second Example Embodiment]

A lighting apparatus, an information processing apparatus, an information processing method, and a recording medium according to a second example embodiment will be described. The following describes the lighting apparatus, the information processing apparatus, the information processing method, and the recording medium according to the second example embodiment, by using an information processing system SYS2 to which the lighting apparatus, the information processing apparatus, the information processing method, and the recording medium according to the second example embodiment are applied.

### Configuration of Information Processing System SYS2]

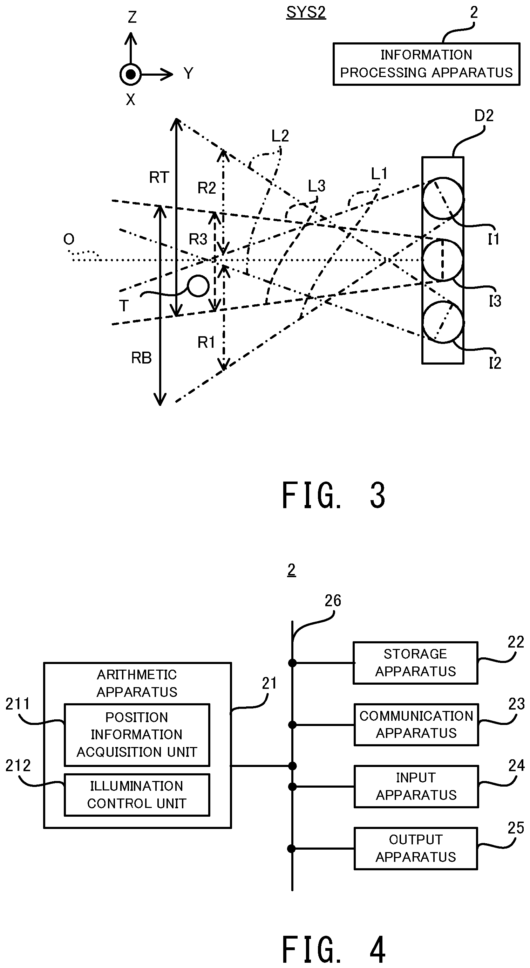

With reference to FIG. 3, a configuration of the information processing system SYS2 according to the second example embodiment will be described. FIG. 3 is a cross-sectional view illustrating the configuration of the information processing system SYS2 according to the second example embodiment. In FIG. 3, a positional relation of components constituting the information processing system SYS2 will be described by using a three-dimensional coordinate system including an X-axis, a Y-axis, and a Z-axis that are perpendicular to each other. Each of the X-axis and the Y-axis is an axis along a horizontal plane (i.e., an axis extending in a horizontal direction), and the Z axis is an axis perpendicular to the horizontal plane (i.e., an axis extending in a vertical direction).

As illustrated in FIG. 3, the information processing system SYS2 includes a lighting apparatus D2 that is a specific example of the "lighting apparatus" described in Supplementary Note later, and an information processing apparatus 2 that is a specific example of the "information processing apparatus" described in Supplementary Note later. The lighting apparatus D2 is configured to illuminate the target T with the light L, as in the lighting apparatus D1. The information processing apparatus 2 is configured to control the lighting apparatus D2.

As illustrated in FIG. 3, the lighting apparatus D2 further includes a first illuminator I1 that is a specific example of the "first illumination unit" described in Supplementary Note later, a second illuminator I2 that is a specific example of the "second illumination unit" described in Supplementary Note later, and a third illuminator I3 that is a specific example of the "third illumination unit" described in Supplementary Note later. The first illuminator I1 irradiates first light L1 as the light L toward a first area R1. The second illuminator I2 is disposed on one side in the predetermined direction from the first illuminator I1, and irradiates second light L2 as the light L toward a second area R2 located on the other side in the predetermined direction from the first area R1. The third illuminator I3 is disposed on the one side in the predetermined direction from the first illuminator I1 and on the other side in the predetermined direction from the second illuminator I2, and irradiates third light L3 as the light L toward a third area R3 located on the other side in the predetermined direction from the first area R1 and on the one side in the predetermined direction from the second area R2. The lighting apparatus D2, however, may not include the third illuminator I3.

Each of the first area R1, the second area R2, and the third area R3 may include, for example, a range of 1 meter in the predetermined direction. The third area R3 may include an area overlapping the first area R1. In addition, the third area R3 may include an area overlapping the second area R2. Each illuminator I may be provided with such an adjustment that the areas R of the adjacent illuminators I overlap at least partially. The one side in the predetermined direction may be a negative side in the Z-axis direction illustrated in FIG. 3, or may be a vertically lower side. Furthermore, the other side in the predetermined direction may be a positive side in the Z-axis direction illustrated in FIG. 3, or may be a vertically upper side.

### Configuration of Information Processing Apparatus 2]

With reference to FIG. 4, a configuration of the information processing apparatus 2 according to the second example embodiment will be described. FIG. 4 is a block diagram illustrating the configuration of the information processing apparatus 2 according to the second example embodiment.

As illustrated in FIG. 4, the information processing apparatus 2 includes an arithmetic apparatus 21 and a storage apparatus 22. Furthermore, the information processing apparatus 2 may include a communication apparatus 23, an input apparatus 24, and an output apparatus 25. The information processing apparatus 2, however, may not include at least one of the communication apparatus 23, the input apparatus 24, and the output apparatus 25. The arithmetic apparatus 21, the storage apparatus 22, the communication apparatus 23, the input apparatus 24, and the output apparatus 25 may be connected via a data bus 26.

The arithmetic apparatus 21 includes at least one of a CPU (Central Processing Unit), a GPU (Graphics Processing Unit), and a FPGA (Field Programmable Gate Array), for example. The arithmetic apparatus 21 reads a computer program. For example, the arithmetic apparatus 21 may read a computer program stored in the storage apparatus 22. For example, the arithmetic apparatus 21 may read a computer program stored by a computer-readable and non-transitory recording medium, by using a not-illustrated recording medium reading apparatus provided in the information processing apparatus 2 (e.g., the input apparatus 24 described later). The arithmetic apparatus 21 may acquire (i.e., download or read) a computer program from a not-illustrated apparatus disposed outside the information processing apparatus 2 via the communication apparatus 23 (or another communication apparatus). The arithmetic apparatus 21 executes the read computer program. Consequently, a logical functional block for performing an operation to be performed by the information processing apparatus 2 is realized or implemented in the arithmetic apparatus 21. That is, the arithmetic apparatus 21 is allowed to function as a controller for realizing or implementing the logical functional block for performing an operation (in other words, processing) to be performed by the information processing apparatus 2.

FIG. 4 illustrates an example of the logical functional block realized or implemented in the arithmetic apparatus 21 to perform an illumination control operation or a lighting control operation. As illustrated in FIG. 4, a position information acquisition unit 211 that is a specific example of the "position information acquisition unit" described in Supplementary Note later, and an illumination control unit 212 that is a specific example of the "the illumination control unit" described in Supplementary Note later, are realized or implemented in the arithmetic apparatus 21. Operation of each of the positional acquisition unit 211 and the illumination control unit 212 will be described in detail later.

The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program. The storage apparatus 22 may store data that are stored by the information processing apparatus 2 for a long time. The storage apparatus 22 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 22 may include a non-transitory recording medium.

The communication apparatus 23 is configured to communicate with an apparatus external to the information processing apparatus 2 via a not-illustrated communication network. The communication apparatus 23 may transmit an illumination control signal to the lighting apparatus D2 via the communication network. The communication apparatus 23 may acquire position information acquired by the position information acquisition unit 211 from the apparatus external to the information processing apparatus 2 via the communication network.

The input apparatus 24 is an apparatus that receives an input of information to the information processing apparatus 2 from an outside of the information processing apparatus 2. For example, the input apparatus 24 may include an operating apparatus (e.g., at least one of a keyboard, a mouse, and a touch panel) that is operable by an operator of the information processing apparatus 2. For example, the input apparatus 24 may include a reading apparatus that is configured to read information recorded as data on a recording medium that is externally attachable to the information processing apparatus 2.

The output apparatus 25 is an apparatus that outputs information to the outside of the information processing apparatus 2. For example, the output apparatus 25 may output information as an image. That is, the output apparatus 25 may include a display apparatus (a so-called display) that is configured to display an image indicating the information that is desirably outputted. For example, the output apparatus 25 may output information as audio/sound. That is, the output apparatus 25 may include an audio apparatus (a so-called speaker) that is configured to output audio/sound. For example, the output apparatus 25 may output information onto a paper surface. That is, the output apparatus 25 may include a print apparatus (a so-called printer) that is configured to print desired information on the paper surface.

### Illumination Control Operation of Information Processing Apparatus 2]

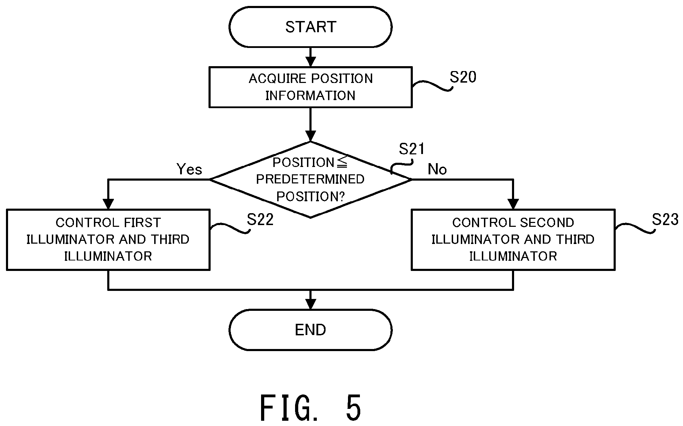

With reference to FIG. 5, a flow of the illumination control operation performed by the information processing apparatus 2 according to the second example embodiment will be described. FIG. 5 is a flowchart illustrating the flow of the illumination control operation performed by the information processing apparatus 2 according to the second example embodiment.

As illustrated in FIG. 5, the position information acquisition unit 211 acquires information indicating the position of the target T (step S20). The position of the target T may be an eye height of a target person P.

The illumination control unit 212 determines whether or not the target T is located on one side in the predetermined direction from the predetermined position O (step S21). The one side in the predetermined direction may be the negative side in the Z-axis direction illustrated in FIG. 3, or may be the vertically lower side. The other side in the predetermined direction may be the positive side in the Z-axis direction illustrated in FIG. 3, or may be the vertically upper side.

When the target T is located vertically lower than the predetermined position O (the step S21: Yes), the illumination control unit 212 controls the third illuminator I3, as well as controlling the first illuminator I1 (step S22). The illumination control unit 212 controls the first illuminator I1 to illuminate the target T with the first light L1. The illumination control unit 212 also controls the third illuminator I3 to illuminate the target T with the third light L3. That is, the illumination control unit 212 may perform control to illuminate a lower area RB illustrated in FIG. 3. The lower area RB may be an area including the first area R1 and the third area R3.

When the target T is located vertically upper than the predetermined position O (the step S21: No), the illumination control unit 212 controls the third illuminator I3, as well as controlling the second illuminator I2. The illumination control unit 212 controls the second illuminator I2 to illuminate the target T with the second light L2. The illumination control unit 212 also controls the third illuminator I3 to illuminate the target T with the third light L3. That is, the illumination control unit 212 may perform control to illuminate an upper area RT illustrated in FIG. 3. The upper area RT may be an area including the second area R2 and the third area R3. The upper area RT typically includes an area located vertically upper than the lower area RB.

For example, let us assume that the target T is an eye of the target person P, and that an eye of a first target person P with a first stature is located at a first position in the lower area RB. In this instance, the illumination control unit 212 may control the third illuminator I3, as well as controlling the first illuminator I1, and may illuminate the lower area RB. On the other hand, let us assume that an eye of a second target person P with a second stature that is higher than the first stature, is located at a second position in the upper area RT that is higher than the first position. In this instance, the illumination control unit 212 may control the third illuminator I3, as well as controlling the second illuminator I2, and may illuminate the upper area RT.

### Modified Example of Information Processing System SYS2]

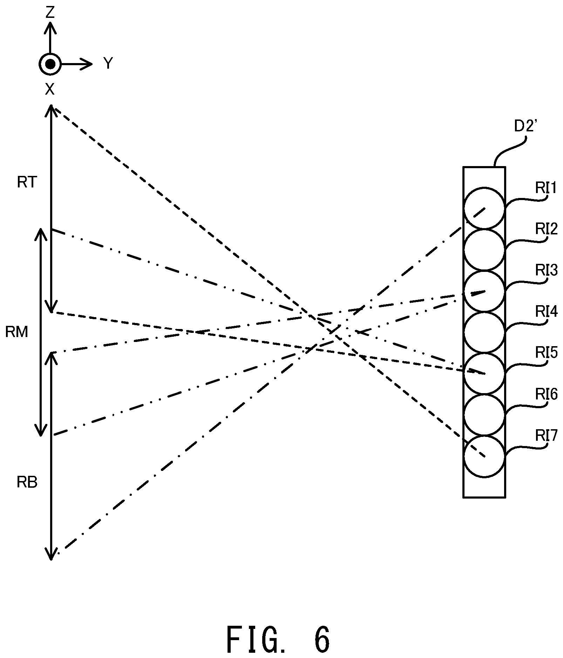

FIG. 3 illustrates a case where the lighting apparatus D2 includes three illuminators I located at different heights, and two areas R located at different heights. The lighting apparatus D2, however, may include three or more illuminators I located at different heights, and may illuminate three or more areas R located at different heights. For example, as illustrated in FIG. 6, a lighting apparatus D2' may include seven illuminators I located at different heights, and may illuminate three areas R located at different heights. The seven illuminators I may be referred to as a first-row illuminator RI1, a second-row illuminator RI2, a third-row illuminator RI3, a fourth-row illuminator RI4, a fifth-row illuminator RI5, a sixth-row illuminator RI6, and a seventh-row illuminator RI7, sequentially from the top. The three areas R may be referred to as an upper area RT, a middle area RM, and a lower area RB, sequentially from the top.

The illumination control unit 212 may control the fifth-row illuminator RI5, the sixth-row illuminator RI6, and the seventh-row illuminator RI7, when the target T is located in the upper area RT. The illumination control unit 212 may control the third-row illuminator RI3, the fourth-row illuminator RI4, and the fifth-row illuminator RI5, when the target T is located in the middle area RM. The illumination control unit 212 may control the first-row illuminator RI1, the second-row illuminator RI2, and may control the third-row illuminator RI3, when the target T is located in the lower area RB. That is, the illumination control unit 212 may control the fifth-row illuminator RI5, when the target T is located in the upper area RT and when the target T is located in the middle area RM. The illumination control unit 212 may control the third-row illuminator RI3, when the target T is located in the lower area RB and when the target T is located in the middle area RM.

### Modified Example of Lighting Apparatus D2]

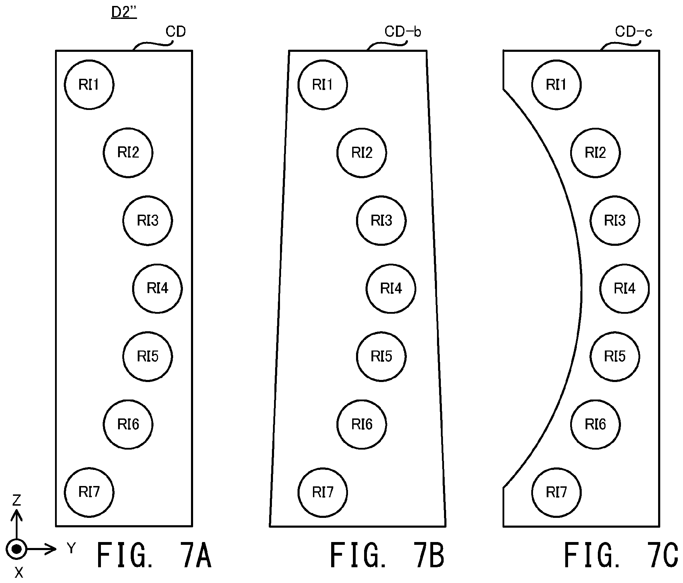

FIG. 7A illustrates a lighting apparatus D2" having a configuration in which seven row illuminators RI are provided. The seven row illuminators RI may be referred to as a first-row illuminator RI1, a second-row illuminator RI2, a third-row illuminator RI3, a fourth-row illuminator RI4, a fifth-row illuminator RI5, a sixth-row illuminator RI6, and a seventh-row illuminator RI7, sequentially from the top. FIG. 7A is a cross-sectional view of the lighting apparatus D2 when viewed from a side surface thereof. Each row illuminator RI may be disposed offset in a direction intersecting the predetermined direction. As illustrated in FIG. 7A, the row illuminator RI closer to the center in the Z-axis direction, may be disposed on a positive side in a Y-axis direction. With this arrangement, for example, when the target T is located in the vicinity of a central part of an area in the Z-axis direction that may be illuminated by the lighting apparatus D2", a distance between each row illuminator RI and the target T may be made equivalent. Furthermore, for example, each row illuminator RI may be disposed offset in an X-axis direction.

Furthermore, a shape of a cover member CD for accommodating the first-row illuminator RI1 to the seventh-row illuminator RI7, when viewed from the side surface, may not be rectangular as illustrated in FIG. 7A. For example, as illustrated in FIG. 7B, a shape of a cover member CD-b when viewed from the side surface may be trapezoidal. Furthermore, the shape of the cover member when viewed from the side surface, may not be a shape made up of straight lines as illustrated in FIG. 7A and FIG. 7B. For example, as illustrated in FIG. 7C, a shape of a cover member CD-c when viewed from the side surface may be a shape including a curve. Especially, it may be a shape including a curved line corresponding to an illumination angle by the illuminator. In a case where the illumination angle by the illuminator corresponds to an angle of the cover member, the lighting apparatus D2" is more likely to properly illuminate the target.

The number of the illuminators I provided in the lighting apparatus D2 may be a number other than three and seven, and the number of the areas R illuminate by the lighting apparatus D2" may be 4 or more.

### Technical Effect of Information Processing System SYS2]

The Information processing system SYS2 according to the second example embodiment, is capable of more properly illuminate the target T at various positions, as compared with the information processing system SYS1 according to the first example embodiment. Since the information processing system SYS2 turns on the plurality of row illuminators I simultaneously, it is possible to compensate for brightness of the target T. For example, in a case where the target T is the eye of the target person, the information processing system SYS2 is capable of reducing the illumination area, thereby preventing the target person from being dazzled.

In some cases, illumination light is reflected to an iris area because the illumination area of the illumination light is wide, and reflected light is captured in an iris image. This may deteriorate accuracy of iris authentication. In contrast, since the information processing system SYS2 according to the second example embodiment is capable of narrowing the illumination area, it is possible to reduce a possibility of deterioration in accuracy of the iris authentication caused by the reflection of the reflected light to the iris image.

Furthermore, since the respective illumination directions of the illuminators I intersect each other, the lighting apparatus D2 is capable of preventing the light L from being blocked by a housing/casing of the lighting apparatus D2 or the like. For example, when the first illuminator I1 irradiates the light L toward an area located on a vertically upper side (e.g., the second area R2 in FIG. 3) and irradiates the light L toward an area located on a vertically lower area (e.g., the first area R1 in FIG. 3), each ray of the light L may be blocked by the housing of the lighting apparatus D2 or the like.

### Third Example Embodiment]

A lighting apparatus, an information processing apparatus, an information processing method, and a recording medium according to a third example embodiment will be described. The following describes the lighting apparatus, the information processing apparatus, the information processing method, and the recording medium according to the third example embodiment, by using an information processing system SYS3 to which the lighting apparatus, the information processing apparatus, the information processing method, and the recording medium according to the third example embodiment are applied.

The information processing system SYS3 includes a lighting apparatus D3 and an information processing apparatus 3. As in the lighting apparatus D1 and the lighting apparatus D2, the lighting apparatus D3 is configured to illuminate the target T with the light L. The information processing apparatus 3 is configured to control the lighting apparatus D3. In the third example embodiment, if desired, the light L with which the lighting apparatus D3 illuminates the target T, is referred to as illumination light IL.

### External Appearance of Lighting Apparatus D3]

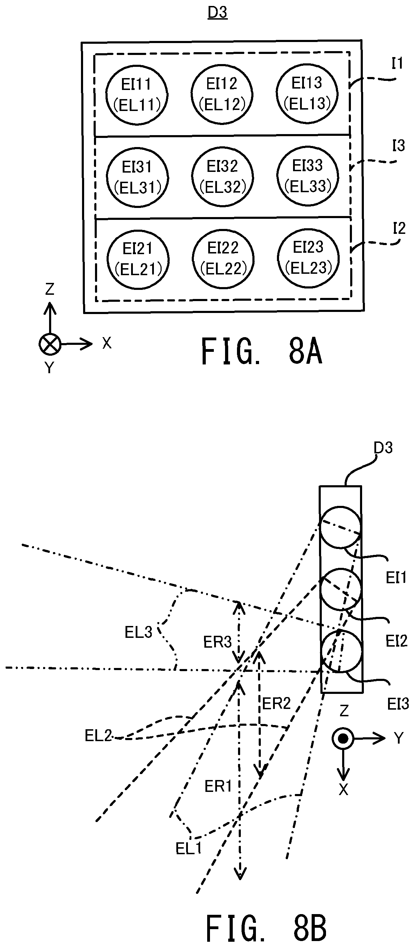

In the third example embodiment, each illuminator I provided in the lighting apparatus D3 includes a plurality of element illuminators EI arranged side by side. FIGs. 8A and 8B is an external view illustrating an external appearance of the lighting apparatus D3. FIG. 8A is a front view of the lighting apparatus D3 when viewed from the front, and FIG. 8B is a top view illustrating the external appearance of the lighting apparatus D3. A transmission surface that transmits the illumination light IL and that intersects an optical path of the illumination light IL emitted by the lighting apparatus D3, may be referred to as the front.

For example, as illustrated in FIG. 8A, the lighting apparatus D3 may include a plurality of element illuminators EI arranged in a matrix. As illustrated in FIG. 8A, the first illuminator I1 may include an element illuminator EI11, an element illuminator EI12, and an element illuminator EI13. The second illuminator I2 may include an illumination element EI21, an illumination element EI22, and an element illuminator EI23. The third illuminator I3 may include an illumination element illuminator EI31, an illumination element, and an element illuminator EI33. In the third example embodiment, a direction in which the illuminators I are arranged, may be referred to as the Z-axis direction, and a direction in which the element illuminators EI are arranged, may be referred to as the X-axis direction. Each of rays of illumination light IL irradiated by the respective element illuminators EI may illuminate a different element area ER. The element areas ER may have an overlapping area. In the following description, the illumination light IL irradiated by the element illuminator EI, will be referred to as "element light EL".

The element illuminator EI11 included in the first illuminator I1 irradiates first element light EL11 that is the element light EL constituting a part of the first light L1, toward a first element area ER1. The element illuminator EI12 included in the first illuminator I1 is disposed on one side in a cross direction intersecting the predetermined direction, from the element illuminator EI11. The element illuminator EI12 irradiates second element light EL12 that is the element light EL constituting a part of the first light L1, toward a second element area ER2 located on the other side in the cross direction from the first element area ER1. The element illuminator EI13 included in the first illuminator I1 is disposed on the one side in the cross direction intersecting the predetermined direction, from the element illuminator EI12. The element illuminator EI13 illuminates third element light EL13 that is the element light EL constituting a part of the first light L1, toward a third element area ER3 located on the other side in the cross direction from the second element area ER2. FIGs. 8A and 8B illustrates an example in which the "predetermined direction" is the Y-axis direction, the "cross direction intersecting the predetermined direction" is the X-axis direction, and the "one side" is an +X side (a right side in FIG. 8A and a lower side in FIG. 8B), and the "other side" is a -X side (a left side in FIG. 8A and an upper side in FIG. 8B). That is, FIG. 8 illustrates an example in which the element illuminator EI12 irradiates the second element light EL12 toward the second element area ER2 that is located on the +X side in the X-axis direction from the element illuminator EI11 and that is located on the -X side in the X-axis direction from the first element area ER1. FIGs. 8A and 8B also illustrates an example in which the element illuminator EI13 irradiates the third element light EL13 toward the third element area ER3 that is located on the +X side in the X-axis direction from the element illuminator EI12 and that is located on the -X side in the X-axis direction from the second element area ER2.

Similarly, the element illuminator EI21 included in the second illuminator I2 irradiates first element light EL21 that is the element light EL constituting a part of the second light L2, toward the first element area ER1. The element illuminator EI22 included in the second illuminator I2 is disposed on one side in the cross direction intersecting the predetermined direction, from the element illuminator EI21. The element illuminator EI22 irradiates second element light EL22 that constitutes a part of the second light L2, toward the second element area ER2. The element illuminator EI23 included in the second illuminator I2 is disposed on the one side in the cross direction intersecting the predetermined direction, from the element illuminator EI22. The element illuminator EI23 irradiates third element light EL23 constituting a part of the second light L2, toward the third element area ER3. That is, FIGs. 8A and 8B illustrates an example in which the element illuminator EI22 irradiates the second element light EL22 toward the second element area ER2 that is located on the +X side in the X-axis direction from the element illuminator EI21 and that is located on the -X side in the X-axis direction from the first element area ER1. FIGs. 8A and 8B also illustrates an example in which the element illuminator EI23 irradiates the third element light EL23 toward the third element area ER3 that is located on the +X side in the X-axis direction from the element illuminator EI22 and that is located on the -X side in the X-axis direction from the second element area ER2.

Similarly, the element illuminator EI31 included in the third illuminator I3 irradiates first element light EL31 constituting a part of the third light L3, toward the first element area ER1. The element illuminator EI32 included in the third illuminator I3 is disposed on one side in the cross direction intersecting the predetermined direction, from the element illuminator EI31. The element illuminator EI32 irradiates second element light EL32 constituting a part of the third light L3, toward the second element area ER2. The element illuminator EI33 included in the third illuminator I3 is disposed on the one side in the cross direction intersecting the predetermined direction, from the element illuminator EI32. The element illuminator EI33 irradiates third element light EL33 constituting a part of the third light L3, toward the third element area ER3. That is, FIGs. 8A and 8B illustrates an example in which the element illuminator EI32 illuminates the second element light EL32 toward the second element area ER2 that is located on the +X side in the X-axis direction from the element illuminator EI31 and that is located on the -X side in the X-axis direction from the first element area ER1. FIGs. 8A and 8 also illustrates an example in which the element illuminator EI33 irradiates the third element light EL33 toward the third element area ER3 that is located on the +X side in the X-axis direction from the element illuminator EI32 and that is located on the -X side in the X-axis direction from the second element area ER2.

In the following description, as illustrated in FIG. 8B, an illuminator including at least one of the element illuminator EI11, the element illuminator EI21, and the element illuminator EI31 may be referred to as the element illuminator EI1. Ab illuminator including at least one of the element illuminator EI12, the element illuminator EI22, and the element illuminator EI32 may be referred to as the element illuminator EI2. An illuminator including at least one of the element illuminator EI13, the element illuminator EI23, and the element illuminator EI33 may be referred to as the element illuminator EI3. At least one of the first element light EL11 irradiated by the element illuminator EI11, the first element light EL21 irradiated by the element illuminator EI21, and the first element light EL31 irradiated by the element illuminator EI31 may be referred to as the first element light EL1. At least one of the second element light EL12 irradiated by the element illuminator EI12, the second element light EL22 irradiated by the element illuminator EI22, and the second element light EL32 irradiated by the element illuminator EI32 may be referred to as the second element light EL2. At least one of the third element light EL13 irradiated by the element illuminator EI13, the third element light EL23 irradiated by the element illuminator EI23, and the third element light EL33 irradiated by the element illuminator EI33 may be referred to as the third element light EL3.

As illustrated in FIG. 8B, the element illuminator EI1 irradiates the first element light EL1 toward the first element area ER1. The element illuminator EI2 irradiates the second element light EL2 toward the second element area ER2. The element illuminator EI3 irradiates the third element light EL3 toward the third element area ER3.

### Configuration of Information Processing Apparatus 3]

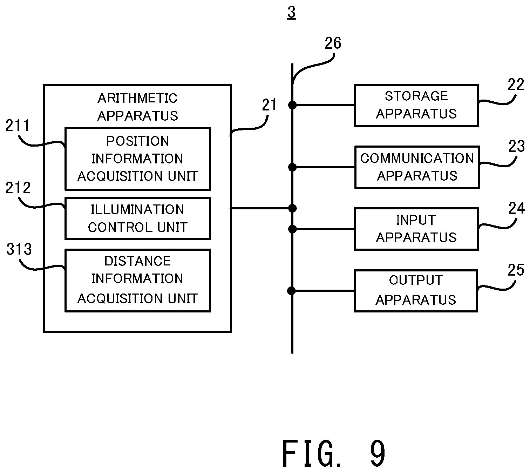

With reference to FIG. 9, a configuration of the information processing apparatus 3 according to the third example embodiment will be described. FIG. 9 is a block diagram illustrating the configuration of the information processing apparatus 3 according to the third example embodiment.

As illustrated in FIG. 9, the information processing apparatus 3 according to the third example embodiment is different from the information processing apparatus 2 according to the second example embodiment in that the arithmetic apparatus 21 further includes a distance information acquisition unit 313. Other features of the information processing apparatus 3 may be the same as those of the information processing apparatus 2. For this reason, a part that is different from each of the example embodiments described above will be described in detail later, and a description of the other overlapping parts will be omitted as appropriate.

### Operation of Information Processing System SYS3]

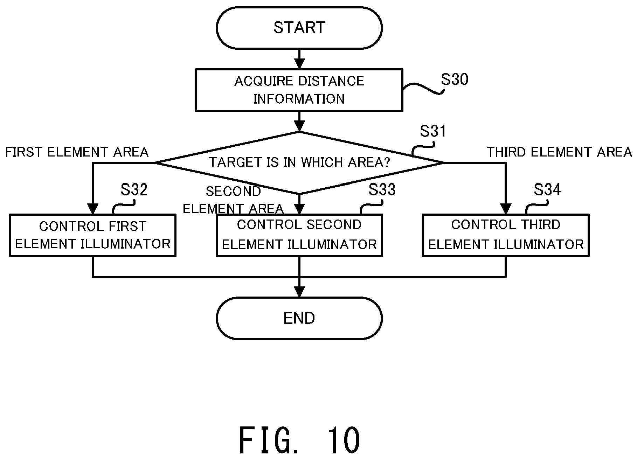

FIG. 10 is a flowchart illustrating a flow of an illumination control operation performed by the information processing apparatus 3 according to the third example embodiment. As illustrated in FIG. 10, the distance information acquisition unit 313 acquires distance information indicating a distance from the lighting apparatus D3 to the target T (step S30). The distance information may be a distance from the element illuminator EI2 to the target T, in the case illustrated in FIG. 8B. The distance information acquisition unit 313 may acquire the distance information from a distance sensor that is a measurement apparatus configured to measure the distance from the lighting apparatus D3 to the target T. An example of the distance sensor may be at least one of a TOF (Time Of Flight) type sensor, a triangulation type sensor, LiDAR (Light Detection and Ranging), and a stereo camera. Alternatively, the distance information acquisition unit 313 may acquire a distance measured by the distance sensor disposed outside the information processing apparatus 3, via the communication apparatus 23. The distance sensor may be mounted on the lighting apparatus D3. The distance sensor may be mounted on the information processing apparatus 3. The distance sensor may be mounted on an apparatus that is different from the light apparatus D3 and the information processing apparatus 3.

The illumination control unit 212 determines in which area the target T is located, based on the distance indicated by the distance information acquired in the step S30 (step S31). In the case illustrated in FIG. 8B, the illumination control unit 212 may determine in which of the first element area ER1, the second element area ER2, and the third element area ER3 the target T is located.

When the target T is located in the first element area ER1 (the step S31: first element area ER1), the illumination control unit 212 controls the element illuminator EI1 (step S32). When the target T is located in the second element area ER2 (the step S31: second element area ER2), the illumination control unit 212 controls the element illuminator EI2 (step S33). When the target T is located in the third element area ER3 (the step S31: third element area ER3), the illumination control unit 212 controls the element illuminator EI3 (step S34). That is, the illumination control unit 212 controls which column of the plurality of element illuminators is to be turned on, based on the distance. In other words, the illumination control unit 212 controls which of the plurality of element illuminators EI arranged in the X-axis direction is to be turned on, based on the distance.

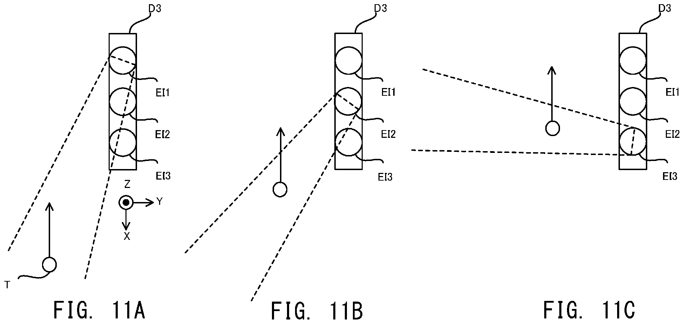

FIGs. 11A to 11C is a conceptual diagram of illumination control based on the distance from the lighting apparatus D3 to the target T. As illustrated in FIG. 11A, when the distance from the lighting apparatus D3 to the target T belongs to the first element area ER1 (i.e., the target T is located in the first element area ER1), the illumination control unit 212 may control the lighting apparatus D3 such that the target T is illuminated with the first element light EL1 by the element illuminator EI1 that is the element illuminator EI provided on a front side in a moving direction of the target T. As illustrated in FIG. 11B, when the distance from the lighting apparatus D3 to the target T belongs to the second element area ER2 (i.e., the target T is located in the second element area ER2), the illumination control unit 212 may control the lighting apparatus D3 such that the target T is illuminated with the second element light EL2 by the element illuminator EI2 that is the element illuminator EI provided at an intermediate position in the moving direction of the target T. As illustrated in FIG. 11C, when the distance from the lighting apparatus D3 to the target T belongs to the third element area ER3 (i.e., the target T is located in the third element area ER3), the illumination control unit 212 may control the lighting apparatus D3 such that the target T is illuminated with the third element light EL3 that is the element illuminator EI provided on a rear side in the moving direction of the target T.

FIGs. 11A to 11C illustrates an example in which the target T moves in the X-axis direction (the direction in which the element illuminators EI are arranged in the third example embodiment), but it is merely an example. The target T may move in a direction that is different from the direction in which the element illuminators EI are arranged, and may move in any direction that intersects the X-axis direction.

### Modified Example of Information Processing System SYS3]

In a modified example, the illumination control unit 212 may take into account the position information acquired by the position information acquisition unit 211 and may control which of the plurality of element illuminators EI is to be turned on. The illumination control unit 212 may control which of the plurality of element illuminators EI is to be turned on, based on at least one of the distance information and the position information.

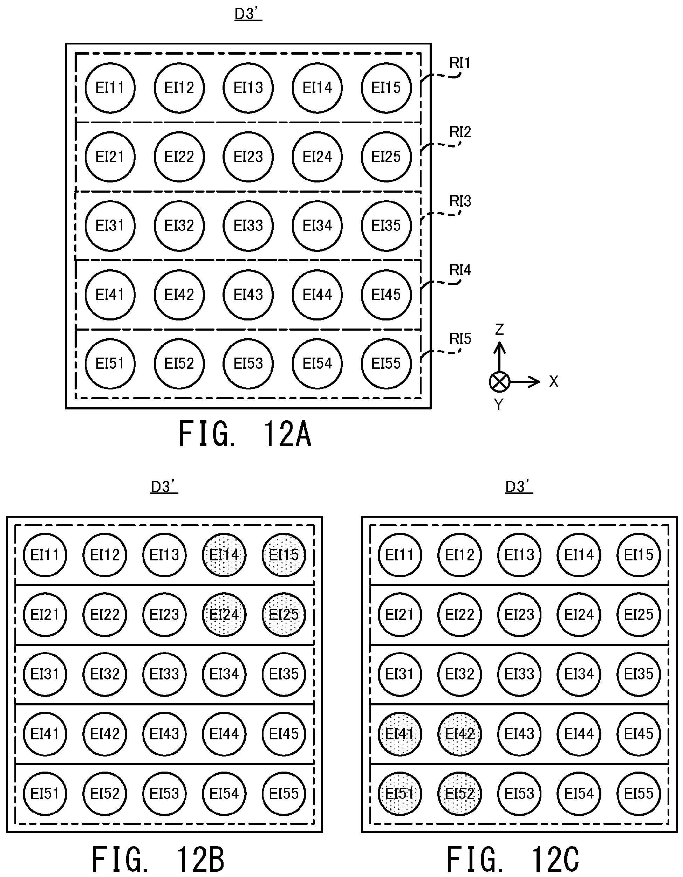

For example, FIGs. 12A to 12C illustrates a lighting apparatus D3' including five rows of illuminators I, each including five element illuminators EI arranged in a column direction (e.g., in the X-axis direction). The five illuminators I may be referred to as a first-row illuminator RI1, a second-row illuminator RI2, a third-row illuminator RI3, a fourth-row illuminator RI4, and a fifth-row illuminator RI5, sequentially from the top. In this instance, in a case where the target T is located at a relatively close position and at a low position to the lighting apparatus D3', the illumination control unit 212 may turn on, for example, four element illuminators EI (EI14, EI15, EI24, and EI25) provided in an upper right, as illustrated in FIG. 12B. Furthermore, in a case where the target T is located at a relatively far position and at a high position to the lighting apparatus D3', the illumination control unit 212 may turn on, for example, four element illuminators EI (EI41, EI42, EI51, and EI52) provided in a lower left, as illustrated in FIG. 12C.

### Modified Example of Lighting Apparatus D3]

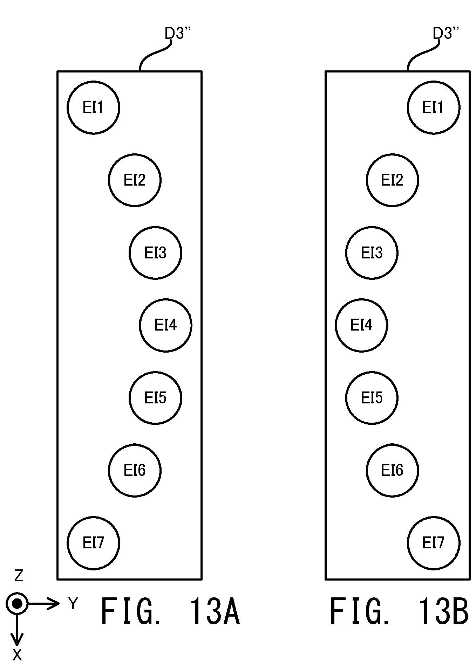

FIGs. 13A and 13B illustrates a lighting apparatus D3" including a plurality of rows of illuminators I, each including seven element illuminators EI arranged in the column direction (e.g., in the X-axis direction). Each of the plurality of rows of illuminators I may be referred to as the row illuminator RI. FIGs. 13A and 13B is a cross-sectional view of the lighting apparatus D3 when viewed from a top surface thereof. As illustrated in FIG. 13A, the element illuminator EI closer to the center in the X-axis direction, may be disposed on the positive side in the Y-axis direction. As illustrated in FIGs. 11A to 11C, since the target T passes through an area on the positive side in the Y-axis direction of the lighting apparatus D3 (e.g., a passing lane), the element illuminator EI closer to the center in the X-axis direction, may be disposed farther from the area where the target T passes through. In other words, as a position of the element illuminator EI is closer to the center in a row direction in which the plurality of element illuminators EI are arranged, the distance may be longer between the element illuminator EI and the area where the target T passes through. Alternatively, as illustrated in FIG. 13B, the element illuminator EI closer to the center in the X-axis direction, may be disposed on a negative side in the Y-axis direction. In any case, the arrangement of the element illuminators EI may be different for each row.

### Technical Effect of Information Processing System SYS3]

In the lighting apparatus D3 provided in the information processing system SYS3 according to the third example embodiment, the illuminator I includes a plurality of element illuminators EI, each directing the element light EL toward a different element area ER in the cross direction intersecting the predetermined direction. It is therefore possible to properly illuminate the target T having various distance relations with the lighting apparatus D3. For example, the information processing system SYS3 is capable of properly illuminating the target T moving to a place where the lighting apparatus D3 is provided. The information processing system SYS3 makes it possible to provide more opportunities to properly illuminate the target T. The information processing system SYS3 is capable of illuminating the position of the target T more accurately.

### Fourth Example Embodiment]

A lighting apparatus, an information processing apparatus, an information processing system, an information processing method, and a recording medium according to a fourth example embodiment will be described. The following describes the lighting apparatus, the information processing apparatus, the information processing system, the information processing method, and the recording medium according to the fourth example embodiment, by using an information processing system SYS4 to which the lighting apparatus, the information processing apparatus, the information processing system, the information processing method, and the recording medium according to the fourth example embodiment are applied.

In the following, a positional relation of components constituting the information processing system SYS4 will be described by using a three-dimensional coordinate system including an X-axis, a Y-axis, and a Z-axis that are perpendicular to each other. Each of the X-axis and the Y-axis is an axis along a horizontal plane (i.e., an axis extending in the horizontal direction), and the Z axis is an axis perpendicular to the horizontal plane (i.e., an axis extending in the vertical direction).

### Overall Configuration of Information Processing System SYS4]

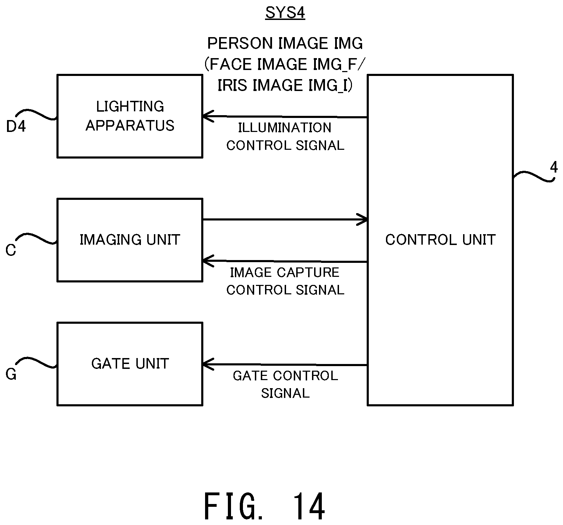

First, with reference to FIG. 14, an overall configuration of the information processing system SYS4 according to the fourth example embodiment will be described. FIG. 14 is a block diagram illustrating the overall configuration of the information processing system SYS4 according to the fourth example embodiment.

As illustrated in FIG. 14, the information processing system SYS4 includes a lighting apparatus D4, an imaging unit C, a gate unit G, and a control unit 4. The imaging unit C, the gate unit G, and the control unit 4 may be respectively referred to as an imaging apparatus, a gate apparatus, and a control apparatus.

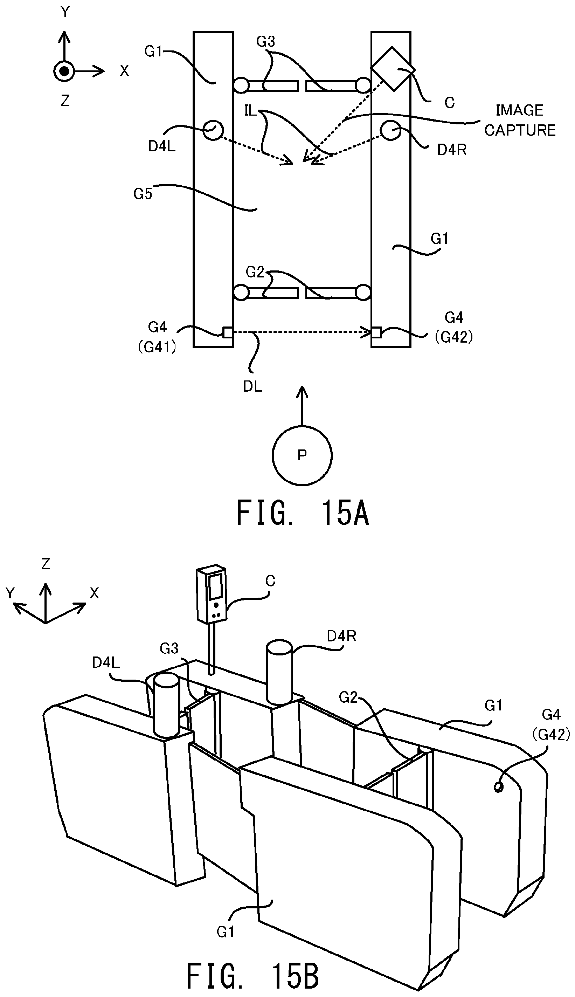

The imaging unit C is configured to capture an image of at least a part of a passing target (see FIG. 15A) passing through a lane G5 described later. The passing target may include, for example, a person. The target may include an animal that is different from the person (e.g., at least one of mammals such as dogs and cats, birds such as sparrows, reptiles such as snakes, amphibians such as frogs, and fish such as goldfish). The passing target may include an inanimate object. The inanimate object may include a robot that mimics a person or an animal. The following describes an example in which the passing target is a person (hereinafter referred to as a "target person P").

The target T described above may be at least a part of the target person P. For example, the target T may be the eye of the target person P.

The lighting apparatus D4 illuminates the target person P with the illumination light IL. The lighting apparatus D4 may be the same as any one of the lighting apparatus D1 according to the first example embodiment to the lighting apparatus D3 according to the third example embodiment.

The imaging unit C is configured to generate a person image IMG in which at least a part of the target person P is captured, by capturing an image of at least the part of the target person P. Specifically, as described in detail later, the imaging unit C is configured to generate an iris image IMG_I in which an iris of the target person P is captured, as the person image IMG, by capturing an image of the iris of the target person P. Furthermore, the imaging unit C may generate a face image IMG_F in which a face of the target person P is captured, as the person image IMG, by capturing an image of the face of the target person P.

A part of the target person P that is different from the iris may be captured in the iris image IMG_I. Even in this case, as described in detail later, since the iris of the target person P captured in the iris image IMG_I is used to authenticate the target person P, there is no problem even if the part of the target person P that is different from the iris is captured in the iris image IMG_I. Alternatively, in a case where the iris image IMG_I captures the part of the target person P that is different from the iris, but not the iris of the target person P, the imaging unit C may generate the iris image IMG_I in which the iris of the target person P is captured, by rotating a rotating mirror C3 and/or by adjusting a position of an iris camera CI, as described in detail later. Similarly, a part of the target person P that is different from the face may be captured in the face image IMG_F. Even in this case, as described in detail later, since the face of the target person P captured in the face image IMG_F is used to locate or identify a position of the eye of the target person P, there is no problem even if the part of the target person P that is different from the face is captured in the face image IMG_F. Alternatively, in a case where the face image IMG_F captures the face of the target person P that is different from the face, but not the face of the target person P, the imaging unit C may generate the face image IMG_F in which the face of the target person P is captured, by adjusting a position of a face CF, as described in detail later.

The control unit 4 acquires the person image IMG from the imaging unit C and performs an authentication operation to authenticate the target person P by using the person image IMG. In the fourth example embodiment, the control unit 4 acquires the iris image IMG_I from the imaging unit C and performs the authentication operation to authenticate the target person P by using the iris image IMG_I. That is, the control unit 4 performs the authentication operation regarding the iris authentication. Specifically, the control unit 4 determines whether or not the target person P captured in the acquired iris image IMG_I is the same as a previously registered person (hereinafter referred to as a "registered person"), based on a pattern of the iris of the target person P captured in the acquired iris image IMG_I. When it is determined that the target person P captured in the iris image IMG_I is the same as the registered person, it is determined that the authentication of the target person P is successful. On the other hand, when it is determined that the target person P captured in the iris image IMG_I is not the same as the registered person, it is determined that the authentication of the target person P is failed.

The control unit 4 may perform an operation of controlling the imaging unit C to capture an image of at least a part of the target person P, as at least a part of the authentication operation. For example, the control unit 4 may control the imaging unit C by outputting, to the imaging unit C, an image capture control signal for controlling the imaging unit C to capture an image of at least a part of the target person P.

The control unit 4 may perform the illumination control operation performed by any one of the information processing apparatus 1according to the first example embodiment to the information processing apparatus 3 according to the third example embodiment. In a case where the lighting apparatus D4 is the same as the lighting apparatus D1, the control unit 4 may perform the same operation as the illumination control operation performed by the information processing apparatus 1. In a case where the lighting apparatus D4 is the same as the lighting apparatus D2, the control unit 4 may perform the same operation as the illumination control operation performed by the information processing apparatus 2. In a case where the lighting apparatus D4 is the same as lighting apparatus D3, the control unit 4 may perform the same operation as the illumination control operation performed by the information processing apparatus 3.

The gate unit G is an apparatus configured to control passage of the target person P. FIG. 15A and FIG. 15B illustrate an example of a configuration of the gate unit G. FIG. 15A is a top view illustrating an example of the configuration of the gate unit G, and FIG. 15B is a perspective view illustrating an example of the configuration of the gate unit G. As illustrated in FIG. 15A and FIG. 15B, the gate unit G includes a pair of guide walls G1, a first flapper gate G2, a second flapper gate G3, and a proximity sensor G4. The configuration of the gate unit G, however, is not limited to the configuration illustrated in FIG. 15A and FIG. 15B.

The pair of guide walls G1 forms a lane G5 for the target person P to pass through, between the pair of guide walls G1. Therefore, each of the pair of guide walls G1 extends in a direction in which the lane G5 extends (the Y-axis direction in the example illustrated in FIG. 15A and FIG. 15B).

The first flapper gate G2 is a plate-like member configured to control the passage of the target person P. In addition to or in place of the first flapper gate G2, a gate bar that is a rod-like member configured to control the passage of the target person P may be used. A state of the first flapper gate G2 is controlled by the control unit 4, based on a result of detection of the target person P by the proximity sensor G4. Specifically, in a case where the proximity sensor G4 detects the target person P, the state of the first flapper gate G2 is controlled by the control unit 4 to be in an open state in which the target person P is allowed to pass through the first flapper gate G2. On the other hand, in a case where the proximity sensor G4 does not detect the target person P, the state of the first flapper gate G2 is controlled by the control unit 4 to be in a closed state in which the target person P is not allowed to pass through the first flapper gate G2. The state of the first flapper gate G2 may be controlled independently of the control by the control unit 4, based on the result of detection of the target person P by the proximity sensor G4.

The second flapper gate G3 is a plate-like member that is configured to control the passage of the target person P. In addition to or in place of the second flapper gate G3, a gate bar that is a rod-like member configured to control the passage of the target person P may be used. A state of the second flapper gate G3 is controlled by the control unit 4, based on a result of authentication of the target person P by the control unit 4. Specifically, when the authentication of the target person P by the control unit 4 is successful (i.e., it is determined that the target person P matches the registered person), the state of the second flapper gate G3 is controlled by the control unit 4 to be in an open state in which the target person P is allowed to pass through the second flapper gate G3. On the other hand, when the authentication of the target person P by the control unit 4 is failed (i.e., it is determined that target person P does not match the registered person), the state of the second flapper gate G3 is controlled by the control unit 4 to be in a closed state in which the target person P is not allowed to pass through the second flapper gate G3.

The proximity sensor G4 is a detection apparatus configured to detect the target person P. The proximity sensor G4 may be configured to detect the target person P who approaches the gate unit G. The proximity sensor G4 may be configured to detect the target person P who has entered the lane G5 formed by the gate unit G. The proximity sensor G4 may be configured to detect the target person P who is about to enter the lane G5 formed by the gate unit G.

In the example illustrated in FIG. 15A and FIG. 15B, the proximity sensor G4 is configured to optically detect the target person P. Specifically, the proximity sensor G4 includes a light emitting apparatus G41 and a light receiving apparatus G42 each of which is disposed on respective one of the pair of guide walls G1. The light emitting apparatus G41 is configured to emit detection light DL propagating across the lane G5. The light receiving apparatus G42 is configured to receive the detection light DL emitted by the light emitting apparatus G41. In a case where the target person P does not enter the lane G5, the detection light DL emitted by the light emitting apparatus G41 is not blocked by the target person P. Thus, the light receiving apparatus G42 receives the detection light DL irradiated by the light emitting apparatus G41. On the other hand, when the target person P enters the lane G5 (especially, enters an optical path of the detection light DL), the detection light DL emitted by the light emitting apparatus G41 is blocked by the target person P. Thus, the light receiving apparatus G42 does not receive the detection light DL emitted by the light emitting apparatus G41. Therefore, a light receiving result by the light receiving apparatus G42 indicates the result of detection of the target person P.

The imaging unit C described above captures an image of the target person P located in the lane G5 formed by the gate unit G. Therefore, the imaging unit C may be disposed in the gate unit G. For example, as illustrated in FIG. 15A and FIG. 15B, the imaging unit C may be disposed on the guide wall G1. An arrangement position of the imaging unit C is not limited to the position illustrated in FIG. 15A and FIG. 15B. The imaging unit C may not be disposed in the gate unit G. The imaging unit C may be disposed in a member that is different from the gate unit G. For example, the imaging unit C may be mounted on a support member (e.g., a wall member or a pole member or the like) disposed in the vicinity of the gate unit G.

The lighting apparatus D4 may be disposed on the guide wall G1, for example. The lighting apparatus D4 illuminates the target person P (especially, his/her eye) with the illumination light IL when the imaging unit C (especially, the iris camera CI described later) captures an image of the target person P located in the lane G5. As will be described in more detail later, the iris camera CI captures an image of the iris of the target person P located between the first flapper gate G2 and the second flapper gate G3. Therefore, the lighting apparatus D4 may be disposed at a position where the iris of the target person P located between the first flapper gate G2 and the second flapper gate G3 may be illuminated with the illumination light IL. The information processing system SYS4 includes, as the lighting apparatus D4, a left lighting apparatus D4L that is provided on one side of the lane G5 and that illuminates the target person P with left illumination light ILL serving as the illumination light IL, and a right lighting apparatus D4R that is provided on the other side of the lane G5 and that illuminates the target person P with right illumination light ILR serving as the illumination light IL. The left lighting apparatus D4L and the right lighting apparatus D4R are referred to as the lighting apparatus D4 when it is not necessary to distinguish therebetween. FIG. 15B illustrates an example in which the lighting apparatus D4 has a cylindrical shape, but the shape of the lighting apparatus D4 is not limited to the shape illustrated in FIG. 15B. The shape of the lighting apparatus D will be described in detail in another example embodiment later.

The imaging unit C may capture an image of the target person P moving along the lane G5 (e.g., the target person P moving without standing still in front of the imaging unit C). Alternatively, the imaging unit C may capture an image of the target person P standing still in the lane G5 (e.g., the target person P standing still in front of the imaging unit C).

Referring again to FIG. 14, the control unit 4 may perform an operation of controlling the gate unit G based on an authentication result, as at least a part of the authentication operation. For example, the control unit 4 may control the gate unit G, by outputting, to the gate unit G, a gate control signal for switching the state of the first flapper gate G2 between the open state and the closed state. For example, the control unit 4 may control the gate unit G, by outputting, to the gate unit G, a gate control signal for switching the state of the second flapper gate G3 between the open state and the closed state.

### Configuration of Imaging Unit C]

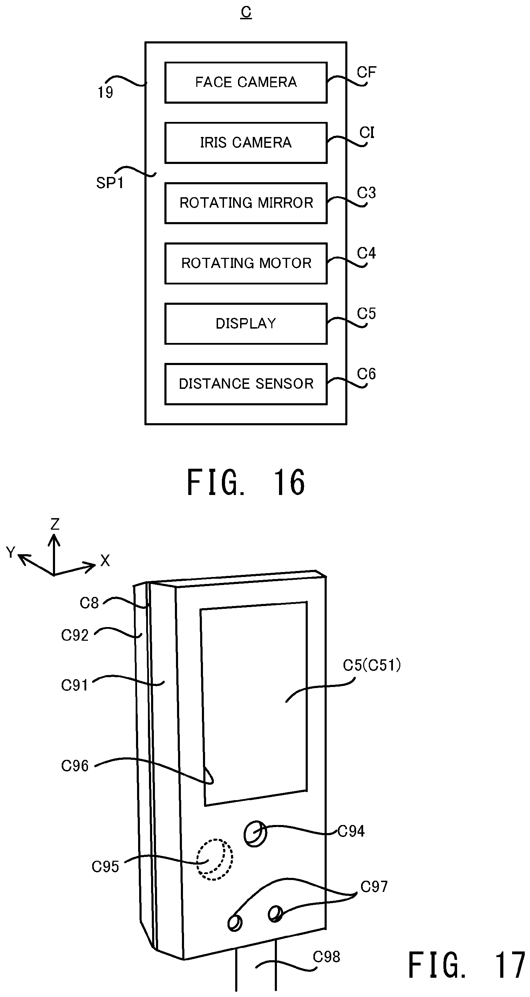

Next, with reference to FIG. 16 and FIG. 17, a configuration of the imaging unit C will be described. FIG. 16 is a block diagram illustrating the configuration of the imaging unit C. FIG.17 is a perspective view illustrating an external appearance of the imaging unit C.

As illustrated in FIG. 16 and FIG. 17, the imaging unit C includes a face camera CF, an iris camera CI that is a specific example of the "imaging unit" described in Supplementary Note later, a rotating mirror C3, a rotating motor C4, a display C5, and a distance sensor C6.

The face camera CF is an imaging apparatus configured to capture an image of the face of the target person P. The face camera CF is typically configured to capture an image of at least a part of the target person P including the face of the target person P. The face camera CF is configured to generate the face image IMG_F in which the face of the target person P is captured, by capturing an image of the face of the target person P.

The iris camera CI is an imaging apparatus configured to capture an image of at least the iris of the target person P. The iris camera CI is typically configured to capture an image of at least a part of the target person P including the iris of the target person P. The iris camera CI is configured to generate the iris image IMG_I in which the iris of the target person P is captured, by capturing an image of the iris of the target person P.

The rotating mirror C3 is an optical element that reflects light from the target person P toward the iris camera CI. The iris camera CI captures an image of the iris of the target person P via the rotating mirror C3. Specifically, as described above, when the iris camera CI captures an image of the iris of the target person P, the iris of the target person P is illuminated with the light L from the lighting apparatus D4. The illumination light IL may include, for example, light of a predetermined wavelength in a near-infrared area or an infrared area. That is, the lighting apparatus D4 illuminates the target person P with the light of the predetermined wavelength in the near-infrared area or the infrared area, as the illumination light IL. Therefore, the iris camera CI captures the iris image of the target person P illuminated with the light of the predetermined wavelength.

Furthermore, the camera C may capture the face image of the target person P illuminated by the lighting apparatus D4 with the light of the predetermined wavelength. The illumination light IL may also include visible light. In this instance, the iris camera CI may capture the iris image of the target person P illuminated by the lighting apparatus D4 with visible light. In addition, the camera C may capture the face image of the target person P illuminated by the lighting apparatus D4 with visible light.

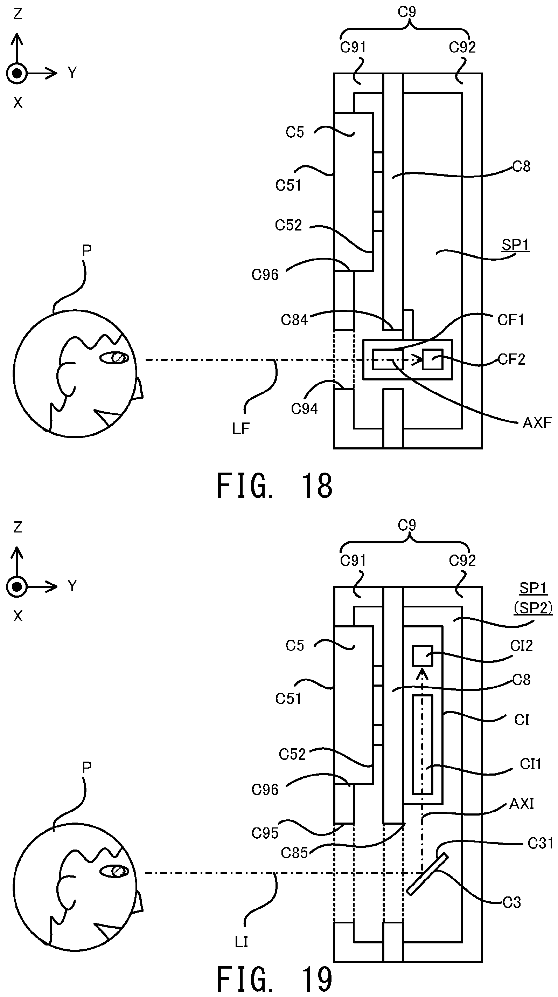

From the iris illuminated with the illumination light, reflected light of the illumination light (or scattered light in addition to or in place of the reflected light) is emitted. Accordingly, the light from the target person P reflected by the rotating mirror C3 toward the iris camera CI may include at least one of the reflected light and the scattered light of the illumination light emitted from the iris. The iris camera CI receives the light from the target person P by using an image sensor element CI2 (see FIG. 19 described later) such as a CCD (Charge Coupled Device) or a CMOS (Complementary Metal Oxide Semiconductor), thereby capturing an image of the iris of the target person P. A technical reason of the iris camera CI capturing an image of the iris of the target person P via the rotating mirror C3, will be described later in the description of arrangement of the iris camera CI.

The rotating motor C4 is a drive apparatus for rotating the rotating mirror C3 around a predetermined rotating axis, under the control of the control unit 4. A technical reason of the rotating motor C4 rotating the rotating mirror C3, will be described later in the description of arrangement of the iris camera CI.

The display C5 is a display apparatus configured to display desired information. For example, the display C5 may be configured to display information about the authentication of the target person P using the iris image IMG_I. The information about the authentication of the target person P may include information about an authentication result of the target person P. The information about the authentication of the target person P may include information of which the target person P who has succeeded in the authentication is notified (e.g., information giving notice of permission to passing through the second flapper gate G3). The information about the authentication of the target person P may include information of which the target person P who has failed in the authentication is notified (e.g., information giving notice of an operation to be performed next by the target person P due to a failure in the authentication).

The imaging unit C may include an arbitrary output apparatus that is configured to output desired information, in addition to or in place of the display C5. For example, the imaging unit C may include an audio output apparatus (e.g., a speaker) that is configured to output desired information as audio/sound. For example, the imaging unit C may include a paper output apparatus (e.g., a printer) that is configured to output a sheet of paper with desired information written thereon.

The distance sensor C6 is a measurement apparatus configured to measure a distance from the imaging unit C to the target person P. The distance sensor C6 may be configured to optically measure the distance from the imaging unit C to the target person P. An example of the distance sensor C6 configured to optically measure the distance may be at least one of a TOF (Time Of Flight) type sensor, a triangulation type sensor, LiDAR (Light Detection and Ranging), and a stereo camera. In the fourth example embodiment, however, the imaging unit C may not include the distance sensor C6.

As illustrated in FIG. 18 and FIG. 19, the face camera CF, the iris camera CI, the rotating mirror C3, the rotating motor C4, the display C5, and the distance sensor C6 are arranged in a housing C9. That is, the face camera CF, the iris camera CI, the rotating mirror C3, the rotating motor C4, the display C5, and the distance sensor C6 are arranged in an accommodation space SP1 in the housing C9. The housing C9 includes a front housing C91 and a rear housing C92. By combining the front housing C91 and the rear housing C92, the accommodation space SP1 is formed between the front housing C91 and the rear housing C92, and the face camera CF, the iris camera CI, the rotating mirror C3, the rotating motor C4, the display C5, and the distance sensor C6 are arranged in the accommodation space SP1.

A method of arranging the face camera CF, the iris camera CI, the rotating mirror C3 and the display C5 in the housing C9, will be described. FIG. 18 is a cross-sectional view illustrating a cross-section of the imaging unit C (especially, a cross-section including the face camera CF, the display C5, and the housing C9). FIG. 19 is a cross-sectional view illustrating a cross-section of the imaging unit C (especially, a cross-section including the iris camera CI, the rotating mirror C3, the display C5, and the housing C9).

As illustrated in FIG. 18 and FIG. 19, the face camera CF, the iris camera CI, and the display C5 may be supported by a support plate C8 in the housing C9. That is, the face camera CF, the iris camera CI and the display C5 may be accommodated in the housing C9, with the face camera CF, the iris camera CI and the display C5 mounted on the support plate C8. In the example illustrated in FIG. 18 and FIG. 19, the support plate C8 is a plate-like member along an XZ plane, but its shape is not limited to the shape illustrated in FIG. 18 and FIG. 19. At least one of the face camera CF, the iris camera CI, and the display C5, however, may not be supported by the support plate C8. In addition to or in place of at least one of the face camera CF, the iris camera CI and the display C5, at least one of the rotating mirror C3, the rotating motor C4, and the distance sensor C6 may be supported by the support plate C8.

At least a part of the support plate C8 may be exposed to an outside of the housing C9. For example, in the example illustrated in FIG. 18 and FIG. 19 (and furthermore, FIG. 17), the support plate C8 is accommodated in the housing C9 so as to be sandwiched/inserted between the front housing C91 and the rear housing C92. In this case, as illustrated in FIG. 18 and FIG. 19 (and furthermore, FIG. 17), at least a part of an outer edge of the support plate C8 may be exposed to the outside of the housing C9. Consequently, heat generated by the face camera CF, the iris camera CI and the display C5 may be released to the outside of the housing C9 via the support plate C8. Therefore, thermal effect on the operation of the face camera CF, the iris camera CI, and the display C5 is reduced. When the heat generated by the face camera CF, the iris camera CI, and the display C5 is dissipated to the outside of the housing C9 via the support plate C8, the support plate C8 may be a member configured to promote heat dissipation (e.g., a metallic member). The support plate C8, however, may not be exposed to the outside of the housing C9.

A member that is different from the support plate C8 may be used as a member for dissipating the heat generated in the housing C9 to the outside of the housing C9. For example, as illustrated in FIG. 17, in a case where the imaging unit C is mounted on the gate unit G via a connecting member C98, the connecting member C98 may be used as a member for dissipating the heat generated in the housing C9 to the outside of the housing C9. Furthermore, in order to further promote heat dissipation, the imaging unit C may include a heat dissipation fan. The heat dissipation fan may be driven to dissipate the heat generated in the housing C9 to the outside of the housing C9. For example, the heat dissipation fan may be driven to dissipate the heat generated in the housing C9 via an opening formed in the housing C9 (e.g., at least one of openings C94, C95, and C97 described later).

As illustrated in FIG. 18, the face camera CF may be disposed to face in a direction in which the target person P is located. Here, a "direction in which the face camera CF faces" may mean, for example, a direction in which the face camera CF captures an image. In this instance, in the housing C9, the face camera CF may be disposed to capture an image of a space existing in the direction in which the target person P is located. The "direction in which the face camera CF faces" may mean, for example, a direction in which an image capture range of the face camera CF extends when viewed from the face camera CF. In this instance, in the housing C9, the face camera CF may be disposed such that the image capture range extends in the direction in which the target person P is located. The "direction in which the face camera CF faces" may mean, for example, a direction in which an optical system CF1 (e.g., an optical system including a lens or the like) of the face camera CF faces. In this instance, in the housing C9, the face camera CF may be disposed such that the optical system CF1 faces in the direction in which the target person P is located. The "direction in which the face camera CF faces" may mean, for example, a direction in which an optical axis AXF of the optical system CF1 of the face camera CF extends. In this instance, in the housing C9, the face camera CF may be disposed such that the optical axis AXF extends in the direction in which the target person P is located.

In the example illustrated in FIG. 18, the target person P is located in a lateral direction (e.g., in the Y-axis direction, and in the horizontal direction as an example) when viewed from the face camera CF. That is, the target person P is located at a distance in the lateral direction when viewed from the face camera CF. In this instance, the face camera CF may be disposed to face in the lateral direction. For example, the face camera CF may be disposed such that the image capture range of the face camera CF extends in the lateral direction of the face camera CF when viewed from the face camera CF. For example, the face camera CF may be disposed such that the optical axis AXF of the optical system CF1 of the face camera CF extends in the lateral direction (e.g., in a direction along an XY plane, and in the horizontal direction as an example).

The face camera CF receives light LF from the target person P (e.g., light from the face of the target person P) by using an image sensor element CF2 via the optical system CF1, thereby capturing an image of the target person P. The light LF enters the face camera CF (especially, the optical system CF1) via an opening C94 (see FIG. 18) formed in the housing C9. Furthermore, in a case where the face camera CF is supported by the support plate C8, the light LF may enter the face camera CF (especially, the optical system CF 1) via an opening C84 formed in the support plate C8. Alternatively, the face camera CF may be disposed such that at least a part of the face camera CF is disposed in the opening C84 formed in the support plate C8. Consequently, the face camera C9 accommodated in the housing CF is capable of generating the face image IMG_F by capturing an image of the target person P located outside the housing C9.

On the other hand, as illustrated in FIG. 19, the iris camera CI may be disposed to face in a direction that is different from the direction in which the target person P is located. Here, a "direction in which the iris camera CI faces" may mean, for example, a direction in which the iris camera CI captures an image. In this instance, in the housing C9, the iris camera CI may be disposed to capture an image of a space existing in the direction that is different from the direction in which the target person P is located. The "direction in which the iris camera CI faces" may mean, for example, a direction in which an image capture range of the iris camera CI extends when viewed from the iris camera CI. In this instance, in the housing C9, the iris camera CI may be disposed such that the image capture range extends in the direction that is different from the direction in which the target person P is located. The "direction in which the iris camera CI faces" may mean, for example, a direction in which an optical system CI1 (e.g., an optical system including a lens or the like) of the iris camera CI faces. In this instance, in the housing C9, the iris camera CI may be disposed such that the optical system CI1 faces in the direction that is different from the direction in which the target person P is located. The "direction in which the iris camera CI faces" may mean, for example, a direction in which an optical axis AXI of the optical system CI1 of the iris camera CI extends. In this instance, in the housing C9, the iris camera CI may be disposed such that the optical axis AXI extends in the direction that is different from the direction in which the target person P is located.

In the example illustrated in FIG. 19, the target person P is located in the lateral direction (e.g., in the Y-axis direction, and in the horizontal direction as an example) when viewed from the iris camera CI. That is, the target person P is located at a distance in the lateral direction when viewed from the iris camera CI. In this instance, the iris camera CI may be disposed to face in a direction that is different from the lateral direction. As an example, the iris camera CI may be disposed to face in a longitudinal direction (e.g., in the Z-axis direction, and in the vertical direction as an example) that is different from the lateral direction. For example, the iris camera CI may be disposed such that the image capture range of the iris camera CI extends in the longitudinal direction of the iris camera CI when viewed from the iris camera CI. For example, the iris camera CI may be disposed such that the optical axis AXI of the optical system CI1 of the iris camera CI extends in the longitudinal direction. As an example, the iris camera CI may be disposed such that the optical axis AXI extends in a direction intersecting the XY plane, and in the vertical direction or in the Z-axis direction as an example.

The iris camera CI receives light LI from the target person P (e.g., light from the iris of the target person P) by using an image sensor element CI2 via the optical system CI1, thereby capturing an image of the target person P. For the light LI from the target person P, however, it is hard to directly enter the optical system CI1 of the iris camera CI facing in the direction that is different from the direction in which the target person P is located. Therefore, in the fourth example embodiment, the iris camera CI receives the light LI via the rotating mirror C3. That is, the light LI enters the optical system CI1 of the iris camera CI via the rotating mirror C3. Specifically, the rotating mirror C3 is disposed on an optical path of the light LI. The light LI enters a reflecting surface C31 of the rotating mirror C3. The light LI entering the reflecting surface C31 is reflected by the reflecting surface C31. The reflecting surface C31 reflects the light LI toward the iris camera CI (especially, toward the optical system CI1). Consequently, even when the iris camera CI faces in the direction that is different from the direction in which the target person P is located, the iris camera CI is capable of capturing an image of the target person P.

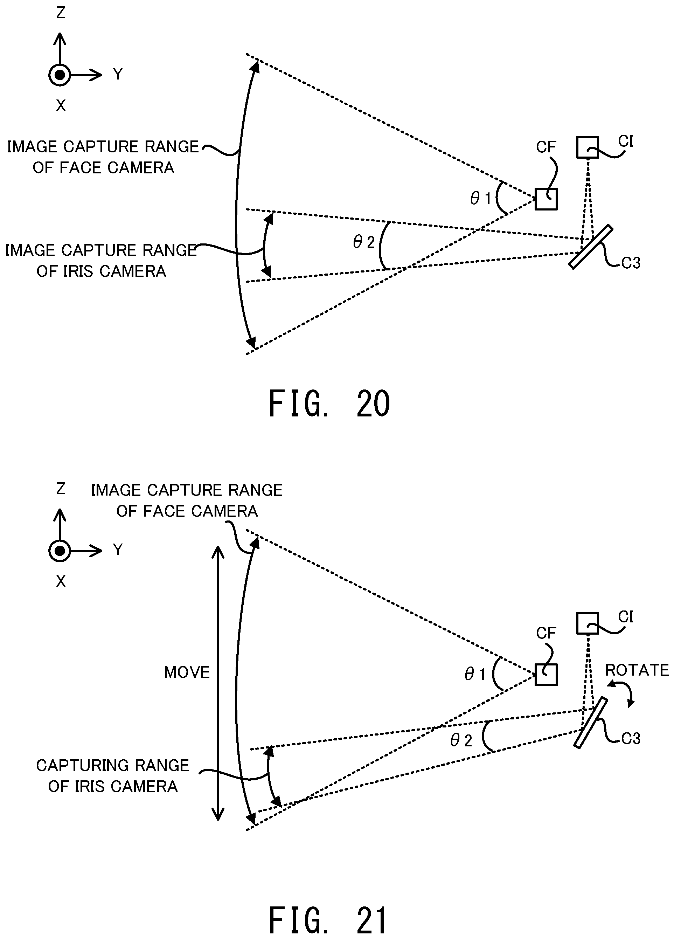

The light LI enters the iris camera CI (especially, the optical system CI1) via an opening C95 (see FIG. 20) formed in the housing C9 (especially, the front housing C91). Furthermore, in a case where the iris camera CI is supported by the support plate C8, the light from the target person P may enter the iris camera CI (especially, the optical system CI1) via an opening C85 formed in the support plate C8. Consequently, the iris camera CI accommodated in the housing C9 is capable of generating the iris target IMG_I by capturing an image of the target person P located outside the housing C9.

As described above, the light LI reflected by the rotating mirror C3 toward the iris camera CI, may include at least one (e.g., near-infrared light) of the reflected light and the scattered light of the illumination light emitted from the iris. In this instance, the opening C95 may be filled with a member that absorbs or reflects a part of visible light while allowing near-infrared light to transmit therethrough. The opening C95 may be filled with a member that exhibits a desired color for visible light while allowing near-infrared light to transmit therethrough. Consequently, the design of an external appearance of the housing C9 (i.e., the design of the external appearance of the imaging unit C) is improved. Furthermore, since it is hard for the target person P to visually recognize an internal structure of the imaging unit C via the opening C95, a line of sight of the target person P is easily guided to the display exposed to the outside of the imaging unit C.

A size of the image capture range of the face camera CF may be different from that of the iris camera CI. Specifically, as illustrated in FIG. 21, the image capture range of the face camera CF may be wider than that of the iris camera CI. That is, an angle of view θ1 of the face camera CF may be greater than an angle of view θ2 of the iris camera CI. In this situation, due to a difference in height of the target person P or the like, the eye of the target person P is not always at a particular position in the image capture range of the face camera CF. For example, the eye of the first target person P with a first height may be at a first position in the image capture range of the face camera CF, whereas the eye of the second target person P with a second height, which is lower than the first height, may be at a second position, which is lower than the first position, in the image capture range of the face camera CF. However, since the angle of view θ2 of the iris camera CI is relatively small, both the eye of the first target person P and the eye of the second target person P are not always included in the image capture range of the iris camera CI. Therefore, in the fourth example embodiment, the imaging unit C may rotate the rotating mirror C3 by using the rotating motor C4, thereby moving the image capture range of the iris camera CI. That is, the imaging unit C may change a direction of the rotating mirror C3 by using the rotating motor C4, thereby moving the image capture range of the iris camera CI. For example, as illustrated in FIG. 21, the imaging unit C may move the image capture range of the iris camera CI in the longitudinal direction (in other words, in the vertical direction, for example, the Z-axis direction), by rotating the rotating mirror C3. Specifically, the imaging unit C may move the image capture range of the iris camera CI in the longitudinal direction, by rotating the rotating mirror C3 around a rotating axis (e.g., a rotating axis in the horizontal direction) intersecting a direction of moving the image capture range of the iris camera CI. As an example, the imaging unit C may move the image capture range of the iris camera CI in the longitudinal direction, by rotating the rotating mirror C3 around a rotating axis (e.g., a rotating axis along the X-axis) intersecting both the direction of moving the image capture range of the iris camera CI (e.g., the Z-axis direction) and the direction in which the target person P is located (e.g., the Y-axis direction).

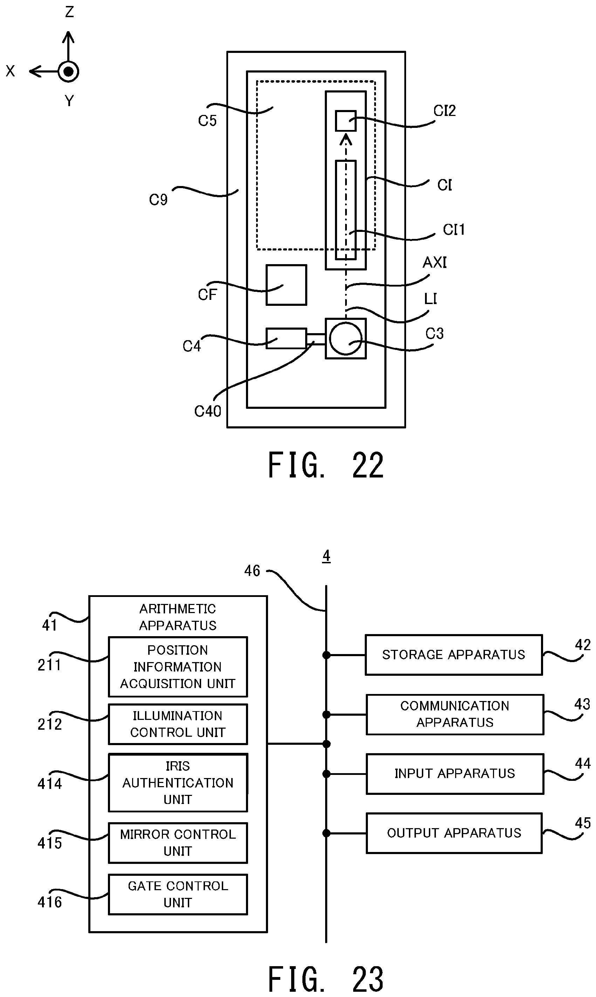

In a case where the rotating mirror C3 is rotated around the rotating axis in the horizontal direction, as illustrated in FIG. 22, the rotating motor C4 that rotates the rotating mirror C3, may be disposed in the housing C9 such that a motor shaft C40 of the rotating motor C4 extends in the horizontal direction. In this instance, a horizontal size of the rotating motor C4 (i.e., a size in the direction in which the motor shaft C40 extends) is one factor determining the horizontal size of the imaging unit C. Specifically, the horizontal size of the imaging unit C is larger than that of the rotating motor C4. Since the horizontal size of the rotating motor C4 is not excessively large, the horizontal size of the imaging unit C is not excessively large.

Referring again to FIG. 18 and FIG. 19, the display C5 is accommodated in the housing C9 such that a display surface C51 capable of displaying information is exposed to the outside of the housing C9. Specifically, the display C5 is accommodated in the housing C9 such that the display surface C51 is exposed to the outside of the housing C9 via an opening C96 (see FIG. 17 to FIG. 19) formed in the housing C9 (especially, the front housing C91). That is, the display C5 is accommodated in the housing C9 such that the display surface C51 is visually recognizable from the outside of the housing C9 via the opening C96.

A space SP2 (see FIG. 19) adjacent to the display C5 in the accommodation space SP1 may be used as a space for accommodating at least a part of the iris camera CI. That is, at least a part of the iris camera CI may be disposed in the space SP2 adjacent to the display C5. Specifically, at least a part of the illumination control unit 12 may be disposed in the space SP2 adjacent to a back surface C52 of the display C5 disposed on a side opposite to the display surface C51.

The distance sensor C6 is accommodated in the housing C9 so as to measure the distance from the imaging unit C to the target person P via an opening C97 (see FIG. 17) formed in the housing C9 (especially, the front housing C91). For example, in a case where the distance sensor C6 configured to optically measure the distance from the imaging unit C to the target person P is accommodated in the housing C9, the distance sensor C6 may be accommodated in the housing C9 so as to emit measurement light via the opening C97 (e.g., so as to illuminate the target person P with the measurement light).

### Configuration of Control Unit 4]

Next, with reference to FIG. 23, a configuration of the control unit 4 will be described. FIG. 23 is a block diagram illustrating the configuration of the control unit 4.

As illustrated in FIG. 23, the control unit 4 includes an arithmetic apparatus 41, a storage apparatus 42, and a communication apparatus 43. The control unit 4 may further include an input apparatus 44 and an output apparatus 45. The control unit 4, however, may not include at least one of the input apparatus 44 and the output apparatus 45. The arithmetic apparatus 41, the storage apparatus 42, the communication apparatus 43, the input apparatus 44, and the output apparatus 45 may be connected via a data bus 46.

The arithmetic apparatus 41 includes at least one of a CPU (Central Processing Unit), a GPU (Graphics Processing Unit), a FPGA (Field Programmable Gate Array), a DSP (Demand-Side Platform), and an ASIC (Application Specific Integrated Circuit), for example. The arithmetic apparatus 41 reads a computer program. For example, the arithmetic apparatus 41 may read a computer program stored in the storage apparatus 42. For example, the arithmetic apparatus 41 may read a computer program stored by a computer-readable and non-transitory recording medium, by using a not-illustrated recording medium reading apparatus provided in the control unit 4. The arithmetic apparatus 41 may acquire (i.e., download or read) a computer program from a not-illustrated apparatus disposed outside the control unit 4 via the communication apparatus 43 (or another communication apparatus). The arithmetic apparatus 41 executes the read computer program. Consequently, a logical functional block for performing an operation to be performed by the control unit 4 is realized or implemented in the arithmetic apparatus 41. That is, the arithmetic apparatus 41 is allowed to function as a controller for realizing or implementing the logical functional block for performing an operation (in other words, processing) to be performed by the control unit 4.

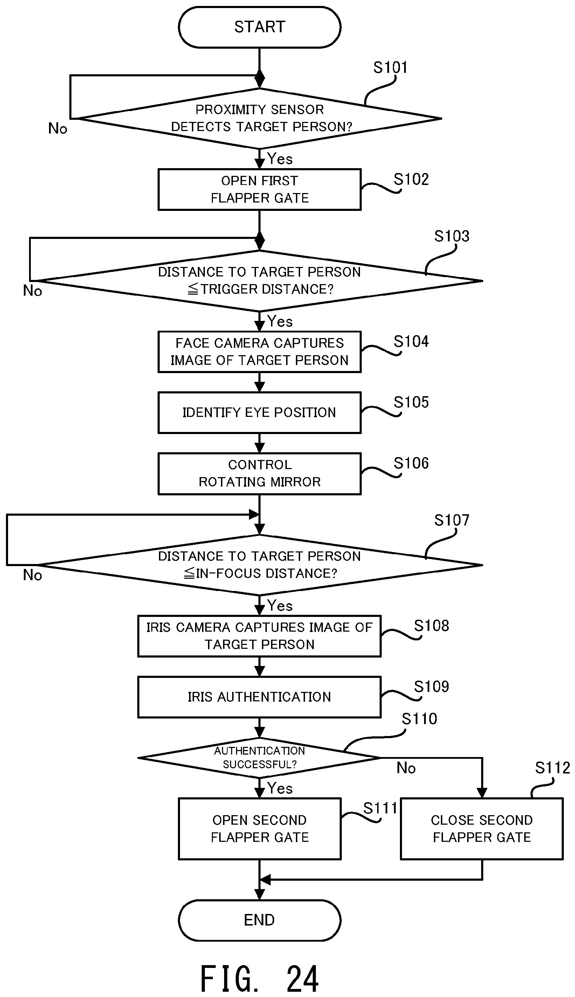

FIG. 23 illustrates an example of the logical functional block realized or implemented in the arithmetic apparatus 41 to perform the authentication operation. As illustrated in FIG. 23, the position information acquisition unit 211, the illumination control unit 212, an authentication unit 414 that is a specific example of the "authentication unit" described in Supplementary Note later, a mirror control unit 415, and a gate control unit 416 are realized or implemented in the arithmetic apparatus 41. Operation of each of the position information acquisition unit 211, the illumination control unit 212, the authentication unit 414, the mirror control unit 415, and the gate control unit 416 will be described in detail later with reference to FIG. 24 or the like, and a description thereof will be omitted here.

The storage apparatus 42 is configured to store desired data. For example, the storage apparatus 42 may temporarily store a computer program to be executed by the arithmetic apparatus 41. The storage apparatus 42 may temporarily store data that are temporarily used by the arithmetic apparatus 41 when the arithmetic apparatus 41 executes the computer program. The storage apparatus 42 may store data that are stored by the control unit 4 for a long time. The storage apparatus 42 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 42 may include a non-transitory recording medium.

The communication apparatus 43 is configured to communicate with each of the lighting apparatus D4, the imaging unit C, and the gate unit G via a not-illustrated communication network. In the fourth example embodiment, the communication apparatus 43 transmits, to the lighting apparatus D4, an illumination control signal for controlling the lighting apparatus D4 to illuminate at least a part of the target person P. The communication apparatus 43 receives (i.e., acquires) the person image IMG (specifically, the face image IMG_F and the iris image IMG_I) from the imaging unit C. Furthermore, the communication apparatus 43 transmits, to the imaging unit C, an image capture control signal for controlling the imaging unit C to capture an image of at least a part of the target person P. The communication apparatus 43 transmits, to the gate unit G, a gate control signal for switching the respective states of the first flapper gate G2 and the second flapper gate G3 between the open state and the closed state.

The input apparatus 44 is an apparatus that receives an input of information to the control unit 4 from an outside of the control unit 4. For example, the input apparatus 44 may include an operating apparatus (e.g., at least one of a keyboard, a mouse, and a touch panel) that is operable by an operator of the control unit 4. For example, the input apparatus 424 may include a reading apparatus that is configured to read information recorded as data on a recording medium that is externally attachable to the control unit 4.

The output apparatus 45 is an apparatus that outputs information to the outside of the control unit 4. For example, the output apparatus 45 may output information as an image. That is, the output apparatus 45 may include a display apparatus (a so-called display) that is configured to display an image indicating the information that is desirably outputted. For example, the output apparatus 45 may output information as audio/sound. That is, the output apparatus 45 may include an audio apparatus (a so-called speaker) that is configured to output audio/sound. For example, the output apparatus 45 may output information onto a paper surface. That is, the output apparatus 25 may include a print apparatus (a so-called printer) that is configured to print desired information on the paper surface.

### Operation of Control Unit 4]

Next, with reference to FIG. 24, a control operation performed by the control unit 4 will be described. FIG. 24 is a flowchart illustrating a flow of the control operation performed by the control unit 4.

As illustrated in FIG. 24, the gate control unit 416 determines whether or not the proximity sensor G4 of the gate unit G detects the target person P (step S101).

As a result of the determination in the step S101, when it is determined that the proximity sensor G4 does not detect the target person P (the step S101: No), the gate control unit 416 continues to determine whether or not the proximity sensor G4 detects the target person P. In this instance, the gate control unit 416 may transmit a gate control signal for setting the state of the first flapper gate G2 into the closed state, to the gate unit G via the communication apparatus 43. Consequently, the state of the first flapper gate G2 is maintained in the closed state.

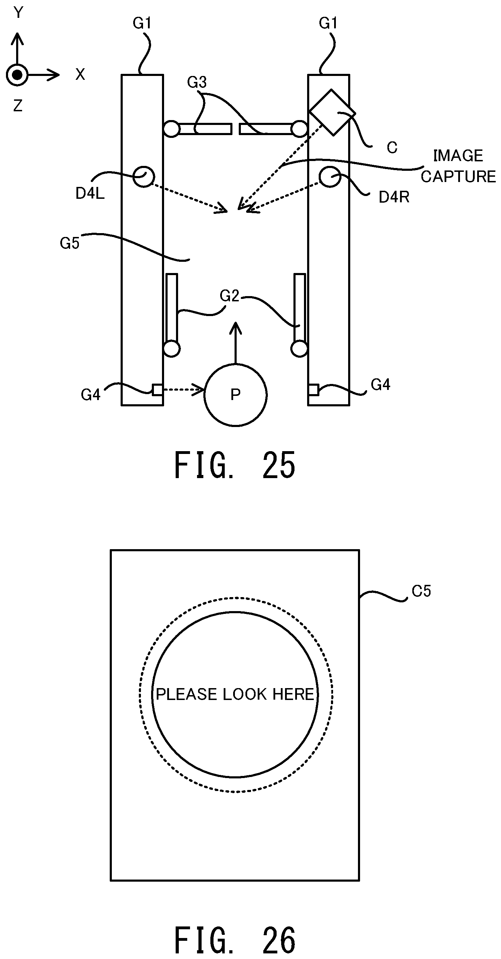

On the other hand, as a result of the determination in the step S101, when it is determined that the proximity sensor G4 detects the target person P (the step S101: Yes), the gate control unit 416 transmits a gate control signal for setting the state of the first flapper gate G2 into the open state, to the gate unit G via the communication apparatus 43 (step S102). Consequently, as illustrated in FIG. 25, the state of the first flapper gate G2 is switched into the open state, and the target person P is allowed to enter the lane G5. As described above, however, independently of the control by the gate control unit 416, the gate unit G may switch the state of the first flapper gate G2 into the open state when the proximity sensor G4 detects the target person P.

In a case where the face camera CF is capable of capturing an image of the target person P who has not passed through the first flapper gate G2, the gate control unit 416 may authenticate the target person P, based on the face image IMG_F generated by the face camera CF, in the step S101. In this instance, when the authentication is successful, the gate control unit 416 may transmit a gate control signal for setting the state of the first flapper gate G2 into the open state, to the gate unit G, in the step S102.

Referring again to FIG. 24, then, the authentication unit 414 determines whether or not the distance from the imaging unit C to the target person P is less than or equal to a predetermined trigger distance, based on a detection result by the distance sensor C6 (step S103). The trigger distance may be a distance from the imaging unit C to a position where the face camera CF is in focus. In this case, an operation of determining whether or not the distance from the imaging unit C to the target person P is less than or equal to the trigger distance, is equivalent to an operation of determining whether or not the target person P entering the lane G5 has arrived at the position where the face camera CF is in focus.

As a result of the determination in the step S103, when it is determined that the distance from the imaging unit C to the target person P is not less than or equal to the trigger distance (the step S103: No), it is estimated that the target person P entering the lane G5 has not yet arrived at the position where the face camera CF is in focus. In this instance, the authentication unit 414 continues to determine whether or not the distance from the imaging unit C to the target person P is less than or equal to the trigger distance.

On the other hand, as a result of the determination in the step S103, when it is determined that the distance from the imaging unit C to the target person P is less than or equal to the trigger distance (the step S103: Yes), it is estimated that the target person P entering the lane G has arrived at the position where the face camera CF is in focus. In this instance, the authentication unit 414 transmits an image capture control signal for controlling the face camera CF to capture an image of the face of the target person P, to the imaging unit C via the communication apparatus 43 (step S104). Consequently, the face camera CF captures an image of the face of the target person P. As described above, however, independently of the control by the authentication unit 414, the face camera CF may capture an image of the face of the target person P when the distance from the imaging unit C to the target person P is less than or equal to the trigger distance.

When the face camera CF captures an image of the face of the target person P, the authentication unit 414 may transmit an image capture control signal for controlling the display C5 to display a predetermined UI (User Interface) screen, to the imaging unit C via the communication apparatus 43. The predetermined UI screen may include, for example, a screen encouraging the target person P to turn the face to the face camera CF. An example of the UI screen encouraging the target person P to turn the face to the face camera CF is illustrated in FIG. 26. FIG. 26 illustrates, as an example of the UI screen, a UI screen including a message encouraging the target person P to turn the face to the display C5 (i.e., to turn the face to the face camera CF disposed with the display C5), together with a round frame specifying the position of the face of the target person P.

Referring again to FIG. 24, then, the authentication unit 414 acquires the face image IMG_F from the face camera CF via the communication apparatus 43, and identifies the position of the eye of the target person P (especially, the position in the longitudinal direction, for example, the position in the Z-axis direction), based on the acquired face image IMG_F (step S105). Thereafter, the authentication unit 414 transmits an image capture control signal for rotating the rotating mirror C3 such that the iris camera CI is capable of capturing an image of the eye located at the position identified in the step S105, to the imaging unit C via the communication apparatus 43 (step S106). That is, the authentication unit 414 transmits an image capture control signal for rotating the rotating mirror C3 such that the eye located at the position identified in the step S105 is included in the image capture range of the iris camera CI, to the imaging unit C via the communication apparatus 43 (step S106). Consequently, as illustrated in FIG. 17, it is possible that the rotating motor C4 rotates the rotating mirror C3, based on the image capture control signal, and that the iris camera CI captures an image of the eye of the target person P. In addition, the illumination control unit 212 transmits the illumination control signal to the lighting apparatus D4 via the communication apparatus 43 such that the illumination light IL is irradiated at the position of the eye identified in the stepS105 (especially, the position in the longitudinal direction, for example, the position in the Z-axis direction). That is, the illumination control unit 212 controls which of the illuminators I or the element illuminators EI included in the lighting apparatus D4 is to be turned on, based on the direction of the rotating mirror C3.

When the iris camera CI captures an image of the eye of the target person P, the lighting apparatus D4 illuminates the eye of the target person P with the illumination light IL. For example, the iris camera CI captures an image of the eye of the target person P after the rotating mirror C3 is rotated in the step S106. Therefore, the lighting apparatus D4 may start to illuminate the eye of the target person P with the illumination light IL before the rotating mirror C3 is rotated in the step S106. For example, the iris camera CI captures an image of the eye of the target person P after the face camera CF captures an image of the face of the target person P in the step S104. Therefore, the lighting apparatus D4 may start to illuminate the eye of the target person P with the illumination light IL after the face camera CF captures an image of the face of the target person P in the step S104. For example, the iris camera CI captures an image of the eye of the target person P after the first flapper gate G2 is opened in the step S102. Therefore, the lighting apparatus D4 may start to illuminate the eye of the target person P with the illumination light IL after the first flapper gate G2 is opened in the step S102. In this instance, the illumination control unit 212 may transmit the illumination control signal to the lighting apparatus D4 so as to turn on the element illuminator(s) EI based on the distance to the eye of the target person.

Referring again to FIG. 24, thereafter, the authentication unit 414 determines whether or not the distance from the imaging unit C to the target person P is less than or equal to a predetermined in-focus distance, based on the detection result by the distance sensor C6 (step S107). The in-focus distance may be a distance from the imaging unit C to a position where the iris camera CI is in focus. In this case, an operation of determining whether or not the distance from the imaging unit C to the target person P is less than or equal to the in-focus distance, is equivalent to an operation of determining whether or not the target person P entering the lane G5 has arrived at the position where the iris camera CI is in focus. The in-focus distance is typically less than the trigger distance described above.

As a result of the determination in the step S107, when it is determined that the distance from the imaging unit C to the target person P is not less than the in-focus distance (the step S107: No), it is estimated that the target person P entering the lane G5 has not yet arrived at the position where the iris camera CI is in focus. In this instance, the authentication unit 414 continues to determine whether or not the distance from the imaging unit C to the target person P is less than or equal to the in-focus distance.

On the other hand, as a result of the determination in the step S107, when it is determined that the distance from the imaging unit C to the target person P is less than or equal to the in-focus distance (the step S107: Yes), it is estimated that the target person P entering the lane G5 has arrived at the position where the iris camera CI is in focus. In this instance, the authentication unit 414 transmits an image capture control signal for controlling the iris camera CI to capture an image of the eye of the target person P, to the imaging unit C via the communication apparatus 43 (step S108). Consequently, the iris camera CI captures an image of the face of the target person P. As described above, however, independently of the control by the authentication unit 414, the iris camera CI may capture an image of the eye of the target person P when the distance from the imaging unit C to the target person P is less than or equal to the in-focus distance. In the step S108, the illumination control unit 212 may control at least one of the left lighting apparatus D4L and the right lighting apparatus D4R to illuminate the target with at least one of the left illumination light ILL and the right illumination light ILR, in response to the iris camera CI capturing an image.

Even when the iris camera CI captures an image of the eye of the target person P, as in a case where the face camera CF captures an image of the face of the target person P, the authentication unit 414 may transmit an image capture control signal for controlling the display C5 to display a predetermined UI screen, to the imaging unit C by via the communication apparatus 43.

Thereafter, the authentication unit 414 acquires the iris image IMG_I from the iris camera CI via the communication apparatus 43, and authenticates the target person P based on the acquired iris image IMG_I (step S109).

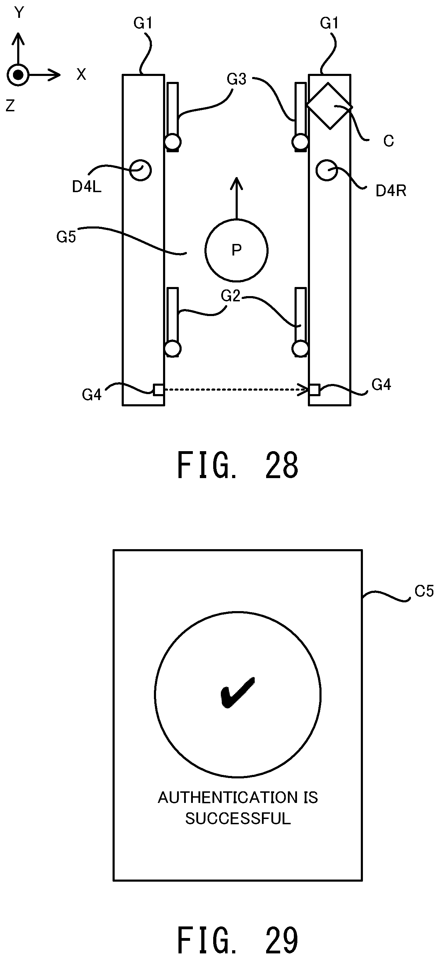

As a result of the authentication in the step S109, when the authentication of the target person P is successful (the step S110: Yes), the gate control unit 416 transmits a gate control signal for setting the state of the second flapper gate G3 into the open state, to the gate unit G via the communication apparatus 43 (step S111). Consequently, as illustrated in FIG. 28, the state of the second flapper gate G3 is switched into the open state, and the target person P is allowed to pass through the lane G5. In addition, when the authentication of the target person P is successful, as illustrated in FIG. 29, the authentication unit 414 may transmit an image capture control signal for controlling the display C5 to display a UI screen for notifying the target person P of the success in the authentication, to the imaging unit C via the communication apparatus 43.

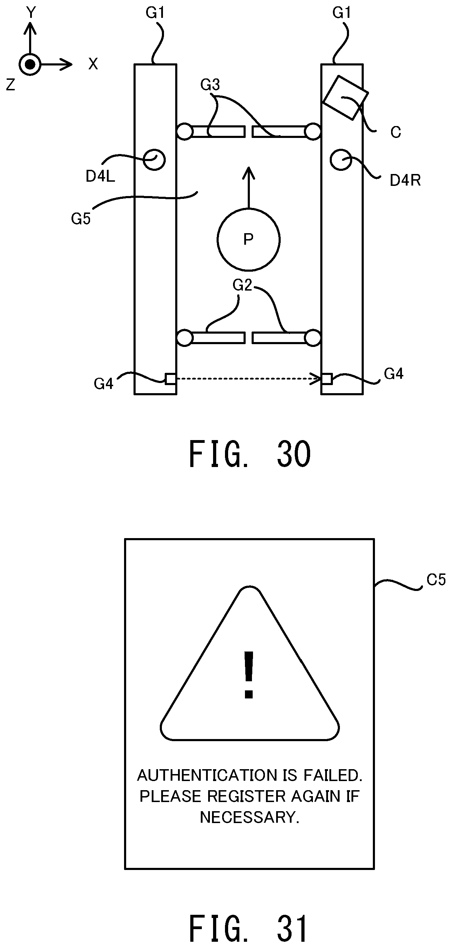

Referring again to FIG. 24, on the other hand, as a result of the authentication in the step S109, when the authentication of the target person P is not successful (i.e., is failed) (the step S110: No), the gate control unit 416 transmits a gate control signal for setting the state of the second flapper gate G3 into the closed state, to the gate unit G via the communication apparatus 43 (step S112). Consequently, as illustrated in FIG. 5 to FIGs. 12A to 12C, the state of the second flapper gate G3 is maintained in the closed state, and the target person P is not allowed to pass through the lane G5. At this time, the gate control unit 416 may transmit a gate control signal for setting the state of the first flapper gate G2 into the closed state, to the gate unit G via the communication apparatus 43. Consequently, as illustrated in FIG. 30, the target person P is confined/trapped between the first flapper gate G2 and the second flapper gate G3. In this instance, the target person P may take an action according to an instruction of a staff who operates the gate unit G or the like. Furthermore, when the authentication of the target person P is not successful, as illustrated in FIG. 31, the authentication unit 414 may transmit an image capture control signal for controlling the display C5 to display a UI screen for notifying the target person P of the failure in the authentication, to the imaging unit C via the communication apparatus 43. In addition, when the authentication of the target person P is not successful, as illustrated in FIG. 31, the authentication unit 414 may transmit an image capture control signal for controlling the display C5 to display a UI screen for encouraging the target person P to register again a pattern of the iris of the target person P (i.e., to register the target person P as the registered person) in the information processing system SYS4, to the imaging unit C via the communication apparatus 43. Moreover, when the authentication of the target person P is not successful, the authentication unit 414 may transmit an image capture control signal for controlling the display C5 to display a UI screen for encouraging the target person P to perform the iris authentication again (i.e., to capture again an image of the iris of the target person P by using the iris camera CI) to display a UI window to prompt target person P, to the imaging unit C via the communication apparatus 43.

### [Modified Example]

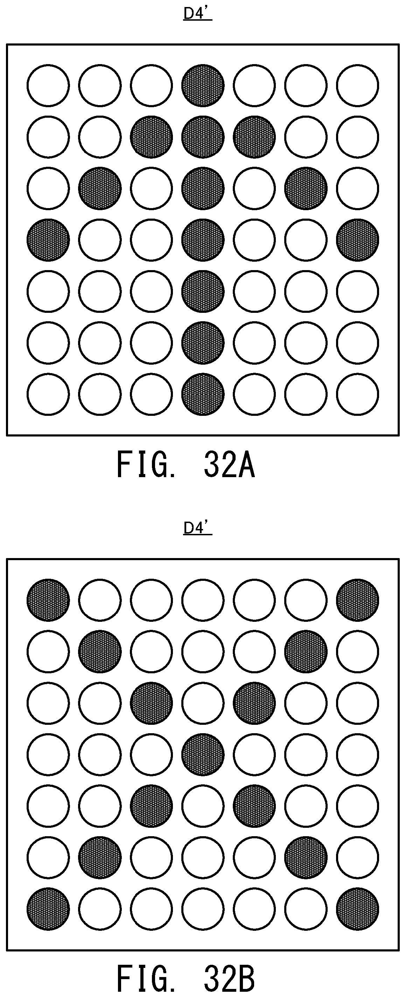

The illumination control unit 212 may control which of a plurality of element illuminators EI included in a lighting apparatus D5 is to be turned on, based on the authentication result of the target person P. As illustrated in FIGs. 32A and 32B, the lighting apparatus D4' may include seven rows of illuminators I, each including seven element illuminators EI.

In the step S111, the illumination control unit 212 may transmit the illumination control signal to the lighting apparatus D4 so as to be turned on to inform the target person P of the success in the authentication. For example, as illustrated in FIG. 32A, the element illuminators EI may be turned on to be in a form of an upward arrow. Alternatively, the element illuminators EI may be turned on in each row from the bottom to encourage the target person P to move in the moving direction.

In the step S112, the illumination control unit 212 may transmit the illumination control signal to the lighting apparatus D4 so as to be turned on to inform the target person P of the failure in the authentication. For example, as illustrated in FIG. 32B, the element illuminators EI may be turned on to be in a form of an × mark.

### Technical Effect of Information Processing System SYS4]

Since the information processing system SYS4 in the fourth example embodiment opens and closes the gate in response to the authentication result of the target T based on an image capture result of the target T in a properly illuminated state, it is possible to perform appropriate gate control. For example, even when the eye of the first target person P with the first height is the target T, or when the eye of the second target person P with the second height, which is higher than the first height, is the target T, the target T is properly illuminated and imaged, and the gate is properly controlled to be open and closed. Since the information processing system SYS4 is capable of illuminating the target T from both sides of the lane G5, the target T may be illuminated more properly.

Based on the direction of the rotating mirror C3, i.e., an exact height of the target T, the information processing system SYS4 is capable of controlling which of the element illuminators EI included in the lighting apparatus D4 is to be turned on. Therefore, it is possible to illuminate the target T at the exact height. In addition, since the illumination light emitted by the lighting apparatus D4 is the light of the predetermined wavelength in a near-infrared area or an infrared area, the information processing system SYS4 is capable of controlling the opening and closing of the gate by using a highly accurate iris image. In addition, since the information processing system SYS4 controls which of the plurality of element illuminators EI included in the lighting apparatus D4 is to be turned on, based on the authentication of the target, it is possible to properly guide the target person P.

### Fifth Example Embodiment]

A lighting apparatus, an information processing apparatus, an information processing system, an information processing method, and a recording medium according to a fifth example embodiment will be described. The following describes the lighting apparatus, the information processing apparatus, the information processing system, the information processing method, and the recording medium according to the fifth example embodiment, by using an information processing system SYS5 to which the lighting apparatus, the information processing apparatus, the information processing system, the information processing method, and the recording medium according to the fifth example embodiment are applied.

### Configuration of Information Processing System SYS5]

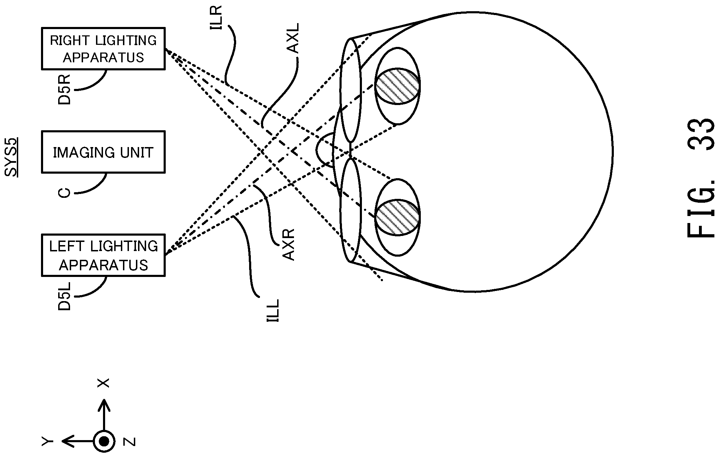

In the fifth example embodiment, the information processing system SYS5 includes, as a lighting apparatus D5, a left lighting apparatus D5Lprovided on a left side of the lane G5 and a right lighting apparatus D5R provided on a right side of the lane G5. Each of the left lighting apparatus D5L and the right lighting apparatus D5R may be the same as the lighting apparatus D4. That is, the left lighting apparatus D5L and the right lighting apparatus D5R may be the same as the left lighting apparatus D4L and the right lighting apparatus D4R, respectively. In the fifth example embodiment, the imaging unit C, the left lighting apparatus D5L, and the right lighting apparatus D5R are arranged in an arrangement aspect illustrated in FIG. 33. Specifically, as illustrated in FIG. 33, the left lighting apparatus D5L is disposed on a left side of the imaging unit C (the -X side in the example illustrated in FIG. 33), facing the imaging unit C. That is, the left lighting apparatus D5L is disposed on the left side of the imaging unit C, when viewed from the target person P an image of which is captured by the imaging unit C. On the other hand, the right lighting apparatus D5R is disposed on a right side of the imaging unit C, facing the imaging unit C (the +X side in the example illustrated in FIG. 33). That is, the right lighting apparatus D5R is disposed on the right side of the imaging unit C, when viewed from the target person P an image of which is captured by the imaging unit C. Furthermore, in timing when the imaging unit C (the iris camera CI provided therein) captures an image of a right eye and a left eye, an optical axis AXL of the left lighting apparatus D5L (e.g., an optical axis of an optical system, such as a lens, provided in the left lighting apparatus D5L) and an optical axis AXR of the right lighting apparatus D5R (e.g., an optical axis of an optical system, such as a lens, provided in the right lighting apparatus D5R) may intersect between the imaging unit C and the target person P. At least one of the left lighting apparatus D5L and the right lighting apparatus D5R may be disposed in the imaging unit C. At least one of the left lighting apparatus D5L and the right lighting apparatus D5R may be disposed at a position that is different from that of the imaging unit C. At least one of the left lighting apparatus D5L and the right lighting apparatus D5R may be integrated with the imaging unit C. At least one of the left lighting apparatus D5L and the right lighting apparatus D5R may be disposed independently of the imaging unit C.

### Configuration of Control Unit 5]

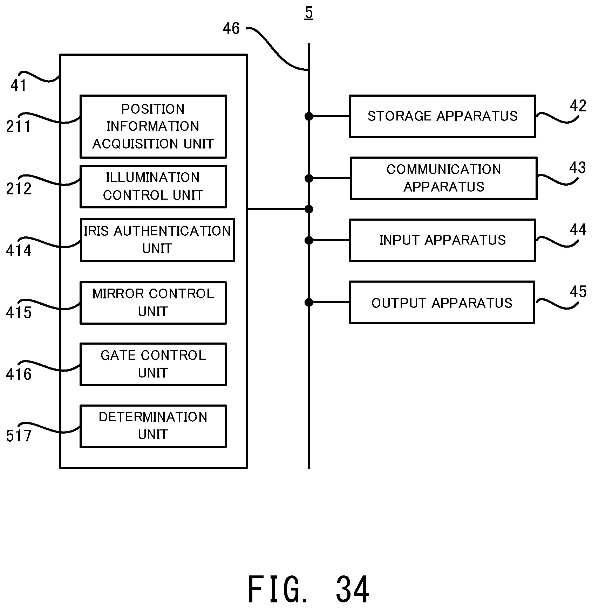

With reference to FIG. 34, a configuration of a control unit 5 according to the fifth example embodiment will be described. FIG. 34 is a block diagram illustrating the configuration of the control unit 5 according to the fifth example embodiment.

As illustrated in FIG. 34, the control unit 5 according to the fifth example embodiment is different from the control unit 4 according to the fourth example embodiment, in that the arithmetic apparatus 41 includes a determination unit 517. Other features of the control unit 5 may be the same as those of the control unit 4. For this reason, a part that is different from each of the example embodiments described above will be described in detail later, and a description of the other overlapping parts will be omitted as appropriate.

### Illumination Control Operation Performed by Control Unit 5]

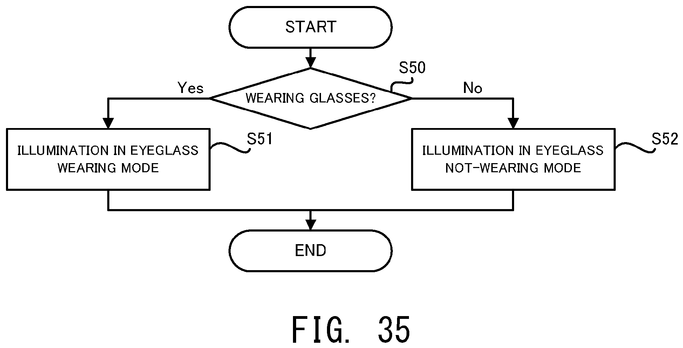

With reference to FIG. 35, a flow of an illumination control operation performed by the control unit 5 according to the fifth example embodiment will be described. FIG. 35 is a flowchart illustrating the flow of the illumination control operation performed by the control unit 5 according to the fifth example embodiment. In the fifth example embodiment, the control unit 5 may typically perform the illumination control operation illustrated in FIG. 35, before starting the operation of the step S108 in FIG. 24.

As illustrated in FIG. 35, the determination unit 517 determines whether or not the target person P is wearing eyeglasses (step S50). The determination unit 517 may determine that the target person P is wearing eyeglasses, when an area in which a value of luminance is higher than a predetermined value is detected in a predetermined area including the position of the eye of the target person P identified in the face image IMG_F. The predetermined value may be a value for determining whether or not the area is a high-luminance area, and may be set as a fixed value in advance, or as a variable value corresponding to average luminance of an entire face image IMG_F, for example. Such a predetermined value may be set as a lower limit of a range obtained by acquiring luminance of an illumination reflected area captured in the face image IMG_F, experimentally, empirically, or by simulation, for example. The eyeglasses may be those including a colorless lens, or may be, for example, suneyeglasses or the like including a colored lens.

When the target person P is wearing eyeglasses (the step S50: Yes), the illumination control unit 212 switches an operating mode of the left lighting apparatus D5L and the right lighting apparatus D5R to an eyeglass wearing mode to control the left lighting apparatus D5L and the right lighting apparatus D5R (step S51). The eyeglass wearing mode is an operating mode in which the left lighting apparatus D5L and the right lighting apparatus D5R illuminate the target person P with the left illumination light ILL and the right illumination light ILR in different timing, respectively. In the eyeglass wearing mode, the illumination control unit 212 may control the left illumination light ILL and the right illumination light ILR with which the target person P is alternately illuminated, or may control the left illumination light ILL and the right illumination light ILR with which the target person P is illuminated in a random order.

When the target person P is not wearing eyeglasses (the step S50: No), the illumination control unit 212 switches the operating mode of the left lighting apparatus D5L and the right lighting apparatus D5R to an eyeglass not-wearing mode to control the left lighting apparatus D5L and the right lighting apparatus D5R (step S52). The eyeglass not-wearing mode is an operating mode in which the left lighting apparatus D5L and the right lighting apparatus D5R illuminate the target person P with the left illumination light ILL and the right illumination light ILR in the same timing, respectively.

Thereafter, the control unit 5 performs the operation of the step S108 in FIG. 24. That is, the control unit 5 transmits an image capture control signal for controlling the iris camera CI to capture an image of the eye of the target person P, to the imaging unit C. Consequently, the iris camera CI captures an image of the face of the target person P. Thereafter, in the step S109 illustrated in FIG. 24, the authentication unit 414 may authenticate the target person P, by using both the iris target IMG_I generated by the iris camera CI capturing an image of the target person P illuminated with the left illumination light ILL by the left lighting apparatus D5L, and the iris target IMG_I generated by the iris camera CI capturing an image of the target person P illuminated with the right illumination light ILR by the right lighting apparatus D5R. The authentication unit 414, however, may authenticate the target person P, by using one of the iris target IMG_I generated by the iris camera CI capturing an image of the target person P illuminated with the left illumination light ILL by the left lighting apparatus D5L, and the iris target IMG_I generated by the iris camera CI capturing an image of the target person P illuminated with the right illumination light ILR by the right lighting apparatus D5R.

### Technical Effect of Information Processing System SYS5]

In a case where the target person P is wearing eyeglasses, the reflected light of the illumination light IL from an eyeglass lens may be captured in the iris image IMG_I. In contrast, in the information processing system SYS5 according to the fifth example embodiment, in a case where the target person P is wearing eyeglasses, the left lighting apparatus D5L and the right lighting apparatus D5R emits the illumination light in different timing. Therefore, it is possible to capture the iris image IMG_I in which the reflected light is not captured in at least one of the left and right irises, and it is possible to perform the iris authentication with high accuracy.

### Sixth Example Embodiment]

A lighting apparatus, an information processing apparatus, an information processing system, an information processing method, and a recording medium according to a sixth example embodiment will be described. The following describes the lighting apparatus, the information processing apparatus, the information processing system, the information processing method, and the recording medium according to the sixth example embodiment, by using an information processing system to which the lighting apparatus, the information processing apparatus, the information processing system, the information processing method, and the recording medium according to the sixth example embodiment are applied.

The information processing system according to the sixth example embodiment includes a lighting apparatus D6, the imaging unit C, the gate unit G, and a control unit 6. The lighting apparatus D6 may be the same as any one of the lighting apparatus D1 according to the first example embodiment to the lighting apparatus D5 according to the fifth example embodiment.

### Configuration of Control Unit 6]

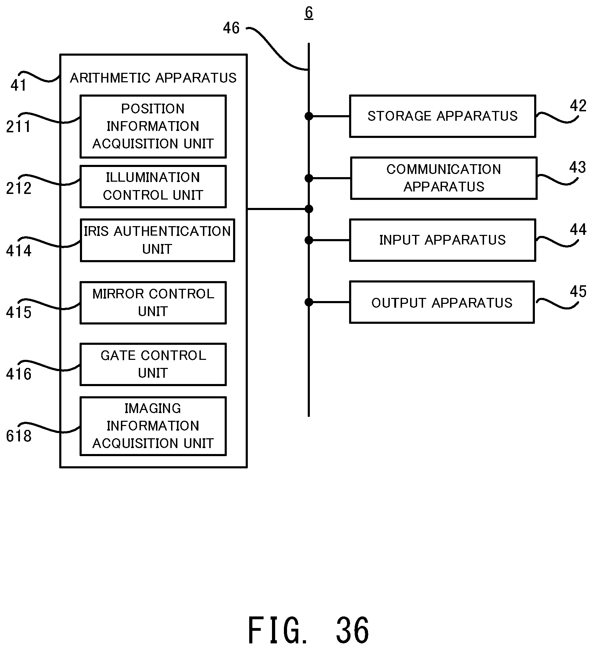

With reference to FIG. 36, a configuration of the control unit 6 according to the sixth example embodiment will be described. FIG. 36 is a block diagram illustrating the configuration of the control unit 6 according to the sixth example embodiment.

As illustrated in FIG. 36, the control unit 6 according to the sixth example embodiment is different from the control unit 4 according to the fourth example embodiment and the control unit 5 according to the fifth example embodiment, in that the arithmetic apparatus 41 includes an image capture information acquisition unit 618. Other features of the control unit 6 may be the same as those of the control unit 4 or the control unit 5. For this reason, a part that is different from each of the example embodiments described above will be described in detail later, and a description of the other overlapping parts will be omitted as appropriate.

### Illumination Control Operation Performed by Control Unit 6]

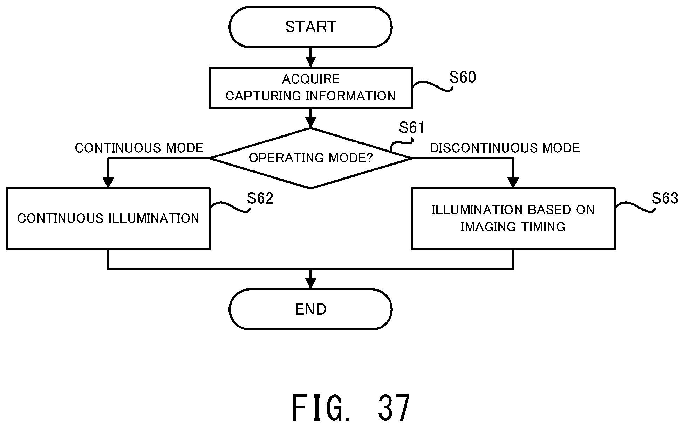

With reference to FIG. 37, a flow of an illumination control operation performed by the control unit 6 according to the sixth example embodiment will be described. FIG. 37 is a flowchart illustrating the flow of the illumination control operation performed by the control unit 6 according to the sixth example embodiment. In the sixth example embodiment, the control unit 6 may typically perform the illumination control operation illustrated in FIG. 37, before starting the operation of the step S108 in FIG. 24.

As illustrated in FIG. 37, the image capture information acquisition unit 618 acquires image capture information from the imaging unit C via the communication apparatus 43 (step S60). In the sixth example embodiment, the iris camera CI may continuously capture images of the target T. The image capture information may include at least one of information indicating image capture timing of image capture of the target T by the iris camera CI, and information indicating an exposure time of the image capture. The image capture timing may be information indicating the number of times of the image capture per unit time by the iris camera CI.

The illumination control unit 212 determines an operating mode, based on at least one of the image capture timing of the target T by the iris camera CI and the exposure time of the image capture (step S61). The operating mode includes a continuous mode and a discontinuous mode. The continuous mode is an operating mode in which the target T is continuously illuminated with the illuminating light IL independently of the image capture timing by the iris camera CI. The discontinuous mode is an operating mode in which the target T is discontinuously illuminated with the illumination optical IL based on the image capture timing.

For example, in a case where the number of times of image capture per unit time by the iris camera CI is relatively large, performing on-off control of the illumination based on the image capture timing may cause a large burden of the on-off control. The lighting apparatus D6 only needs to illuminate the target T in exposure timing of the iris camera CI, i.e., when a shutter is open. In a case where the exposure time per one time of image capture by the iris camera CI is relatively long and the illumination by the lighting apparatus D4 is not required for an extremely short time, there is little merit of turning off the illumination during the time when the illumination is not required. In these cases, the illumination control unit 212 may determine the operating mode to be the continuous mode.

When the operating mode is determined to be the continuous mode (the step S61: continuous mode), the illumination control unit 212 controls the lighting apparatus D6 in the continuous mode to continuously emit the illumination light IL independently of the image capture timing of the target person P (step S62). When the operating mode is determined to be the discontinuous mode (step S61: discontinuous mode), the illumination control unit 212 controls the lighting apparatus D6 in the discontinuous mode to discontinuously irradiate the illumination optical IL based on the image capture timing (step S63).

The illumination control unit 212 may determine which illuminator I is used to illuminate the target T for each image capture, and may switch the illuminator I, for example. Alternatively, in a case where the information processing system according to the sixth example embodiment includes a plurality of lighting apparatuses D6, the illumination control unit 212 may determine which lighting apparatus D6 is used to illuminate the target T for each image capture, and may switch the lighting apparatus D6. That is, in the sixth example embodiment, the position illuminated by the lighting apparatus D6 may vary for each image capture.

### Technical Effect of Information Processing System in Sixth Example Embodiment]

In some cases, powerful near-infrared illumination is a burden on the eyes of the target person P. Since the information processing system according to the sixth example embodiment allows the illumination only at a required moment, i.e., only in the exposure timing when the shutter of the iris camera CI is open, the burden on the eyes of the target person P may be reduced. Furthermore, the illumination control by the information processing system according to the sixth example embodiment makes it possible to realize power saving. Moreover, the illumination control by the information processing system according to the sixth example embodiment is also capable of preventing the lighting apparatus D6 from having high temperature.

On the other hand, in a case where on-off control of the illumination is switched a predetermined number of times or more, the burden of the on-off control of the illumination increases. In such a case, since the information processing system according to the sixth example embodiment is capable of switching the operating mode to the continuous mode, it is possible to reduce the burden of the on-off control of the illumination.

### Seventh Example Embodiment]

A lighting apparatus, an information processing apparatus, an information processing system, an information processing method, and a recording medium according to a seventh example embodiment will be described. The following describes the lighting apparatus, the information processing apparatus, the information processing system, the information processing method, and the recording medium according to the seventh example embodiment, by using an information processing system SYS7 to which the lighting apparatus, the information processing apparatus, the information processing system, the information processing method, and the recording medium according to the seventh example embodiment are applied.

### [7-1: Configuration of Information Processing System SYS7]

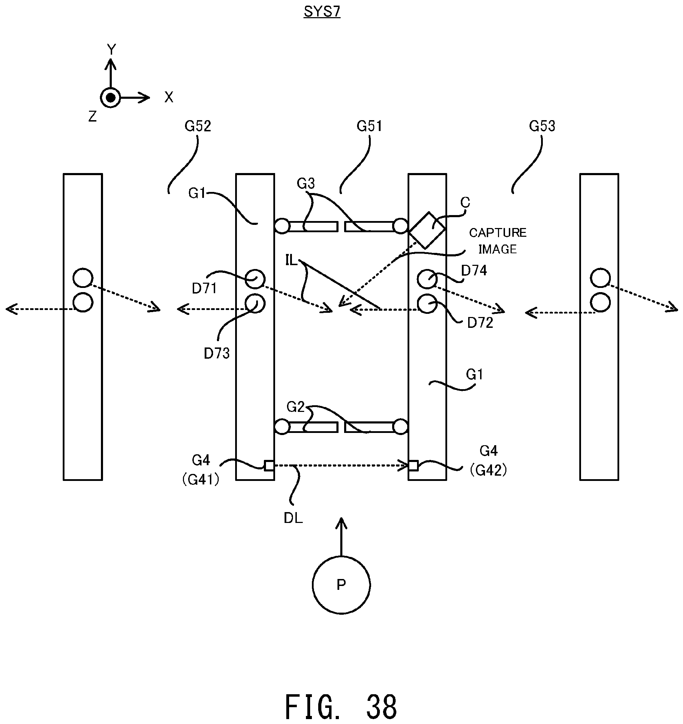

With reference to FIG. 38, a configuration of the information processing system SYS7 according to the seventh example embodiment, especially, the arrangement of lighting apparatuses D7 according to the seventh example embodiment will be described. FIG. 38 is a diagram illustrating the configuration of the information processing system SYS7 according to a seventh example embodiment.

The information processing system SYS7 includes the lighting apparatuses D7, the imaging unit C, the gate unit G, and a control unit 7. The control unit according to the seventh example embodiment may be the same as any one of the control unit 4 according to the fourth example embodiment to the control unit 6 according to the sixth example embodiment. Furthermore, each lighting apparatus D7 may be the same as any one of the lighting apparatus D1 according to the first example embodiment to the lighting apparatus D6 according to the sixth example embodiment.

As illustrated in FIG. 38, the lane G5 includes a first lane G51, a second lane G52 adjacent to one side of the first lane G51, and a third lane G53 adjacent to the other side of the first lane G51. The target person P is allowed to pass through at least one of the first lane G51, the second lane G52, and the third lane G53.

The "one side" in the seventh example embodiment may mean one side in a direction intersecting the direction in which the lane G5 extends (i.e., the moving direction of the target person P passing through the lane G5). In addition, the "other side" in the seventh example embodiment may mean the other side in the direction intersecting the direction in which the lane G5 extends (i.e., the moving direction of the target person P passing through the lane G5). In the example illustrated in FIG. 38, when viewed from the target person P passing through the lane G5, a left side corresponds to the one side and a right side corresponds to the other side.

The information processing system SYS7 includes, as the lighting apparatuses D7, a first lighting apparatus D71, a second lighting apparatus D72, a third lighting apparatus D73, and a fourth lighting apparatus D74. The first lighting apparatus D71 is disposed on the one side of the first lane G51, and illuminates the target person P passing through the first lane G51 with first illumination light IL1 serving as the illumination light IL. The second lighting apparatus D72 is disposed on the other side of the first lane G51, and illuminates the target person P passing through the first lane G51 with second illumination light IL2 serving as the illumination light IL. The third lighting apparatus D73 is disposed on the one side of the first lane G51, and illuminates the target person P passing through the second lane G52 with third illumination light IL3 serving as the illumination light IL. The fourth lighting apparatus D74 is disposed on the other side of the first lane G51, and illuminates the target person P passing through the third lane G53 with fourth illumination light IL4 serving as the illumination light IL.

The imaging unit C is disposed on the other side of the first lane G51. In this instance, the first lighting apparatus D71 disposed on the one side of the first lane G51 is provided on a side in the moving direction of the target person P from the third lighting apparatus D73. The fourth lighting apparatus D74 disposed on the other side of the first lane G51, is provided on a side in the moving direction of the target person P from the second lighting apparatus D72. That is, each lighting apparatus D7 is provided such that a distance from the imaging unit C to the first lighting apparatus D71 is equal to a distance from the imaging unit C to the second lighting apparatus D72.

### Technical Effect of Information Processing System SYS7]

The information processing system SYS7 according to the seventh example embodiment is capable of illuminating the target T with the illumination light IL from the left and right, in each lane G5.
The information processing system SYS7 is capable of equalizing the distance between the imaging unit C and the lighting apparatus D7 provided on the same side as the imaging unit C, to the distance between the imaging unit C and the lighting apparatus D7 provided on a different side from the imaging unit C in each lane G5.
That is, the information processing system SYS7 is capable of properly providing the distance between the imaging unit C and each lighting apparatus D7 in each lane G5. This allows each lighting apparatus D7 to illuminate the target T with an appropriate amount of illumination light IL. Therefore, it is possible to reduce a possibility that the target T is strongly affected by an illumination effect from one the left and right. Both the first lighting apparatus D71 disposed on the one side of the first lane G51 and the second lighting apparatus D72 disposed on the other side of the first lane G51, are capable of illuminating the target T with the illumination light IL with brightness appropriate to acquire the iris image.

### Eighth Example Embodiment]

A lighting apparatus, an information processing apparatus, an information processing system, an information processing method, and a recording medium according to an eighth example embodiment will be described. The following describes the lighting apparatus, the information processing apparatus, the information processing system, the information processing method, and the recording medium according to the eighth example embodiment, by using an information processing system to which the lighting apparatus, the information processing apparatus, the information processing system, the information processing method, and the recording medium according to the eighth example embodiment are applied.

The information processing system according to the eighth example embodiment includes a lighting apparatus D8, the imaging unit C, the gate unit G, and a control unit 8. The lighting apparatus D8 may be the same as any one of the lighting apparatus D1 according to the first example embodiment to the lighting apparatus D7 according to the seventh example embodiment.

### Configuration of Control Unit 8]

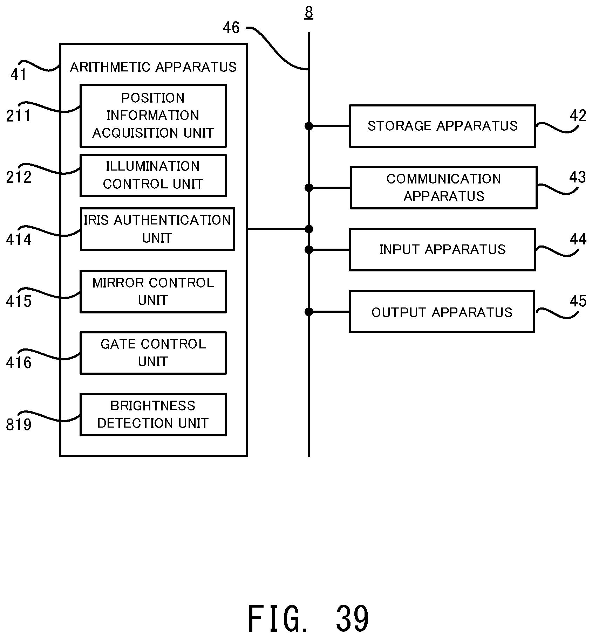

With reference to FIG. 39, a configuration of the control unit 8 according to the eighth example embodiment will be described. FIG. 39 is a block diagram illustrating the configuration of the control unit 8 according to the eighth example embodiment.

As illustrated in FIG. 39, the control unit 8 according to the eighth example embodiment is different from the control unit 4 according to t the fourth example embodiment to the control unit 6 according to t the sixth example embodiment, in that the arithmetic apparatus 41 includes a brightness detection unit 819. Other features of the control unit 8 may be the same as those of any one of the control unit 4 to the control unit 6. For this reason, a part that is different from each of the example embodiments described above will be described in detail later, and a description of the other overlapping parts will be omitted as appropriate.

### Illumination Control Operation Performed by Control Unit 8]

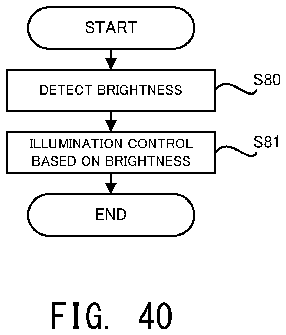

With reference to FIG. 40, a flow of an illumination control operation performed by the control unit 8 according to the eighth example embodiment will be described. FIG. 40 is a flowchart illustrating the flow of the illumination control operation performed by the control unit 8 according to the eighth example embodiment. In the eighth example embodiment, the control unit 8 may typically perform the illumination control operation illustrated in FIG. 40, before starting the operation of the step S108 in FIG. 24.

As illustrated in FIG. 40, the brightness detection unit 819 detects brightness of the target T when the target T is illuminated (step S80). The brightness detection unit 819 may detect the brightness of the target T in the face image IMG_F generated in the step S104 illustrated in FIG. 24. Alternatively, the iris camera CI may continuously capture images of the target T after the distance to the target person P is determined to be less than or equal to the in-focus distance in the step S107 in FIG. 24, and the brightness detection unit 819 may detect the brightness of the target T in the iris image IMG_I generated in the previous image capture.

The illumination control unit 212 controls illumination intensity of the illumination light IL, based on the brightness (step S81). The illumination control unit 212 may control the illumination intensity such that the target T is illuminated with brightness appropriate to acquire the iris image IMG_I.

### Technical Effect of Information Processing System in Eighth Example Embodiment]

The information processing device according to the eighth example embodiment is capable of illuminating the target T with appropriate brightness.

### Ninth Example Embodiment]

A lighting apparatus, an information processing apparatus, an information processing system, an information processing method, and a recording medium according to a ninth example embodiment will be described. The following describes the lighting apparatus, the information processing apparatus, the information processing system, the information processing method, and the recording medium according to the ninth example embodiment, by using an information processing system to which the lighting apparatus, the information processing apparatus, the information processing system, the information processing method, and the recording medium according to the ninth example embodiment are applied.

The information processing system according to the ninth example embodiment includes a lighting apparatus D9, the imaging unit C, the gate unit G, and a control unit 9. The lighting apparatus D9 may be the same as any one of the lighting apparatus D1 according to the first example embodiment to the lighting apparatus D8 according to the eighth example embodiment.

### Configuration of Control Unit 9]

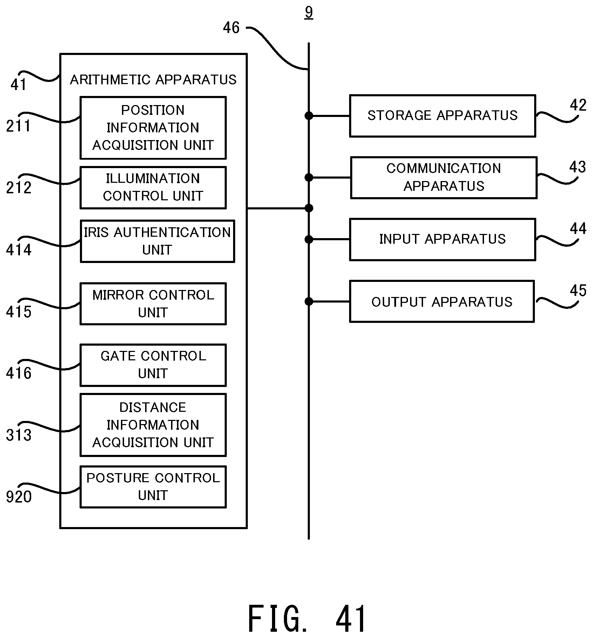

With reference to FIG. 41, a configuration of the control unit 9 according to the ninth example embodiment will be described. FIG. 41 is a block diagram illustrating the configuration of the control unit 9 according to the ninth example embodiment.

As illustrated in FIG. 41, the control unit 9 according to the ninth example embodiment is different from the control unit 4 according to the fourth example embodiment to the control unit 8 according to the eighth example embodiment, in that the arithmetic apparatus 41 includes the distance information acquisition unit 313 and a posture control unit 920. Other features of the control unit 9 may be the same as those of any one of the control unit 4 to the control unit 8. For this reason, a part that is different from each of the example embodiments described above will be described in detail later, and a description of the other overlapping parts will be omitted as appropriate.

### External Appearance of Lighting Apparatus D9]

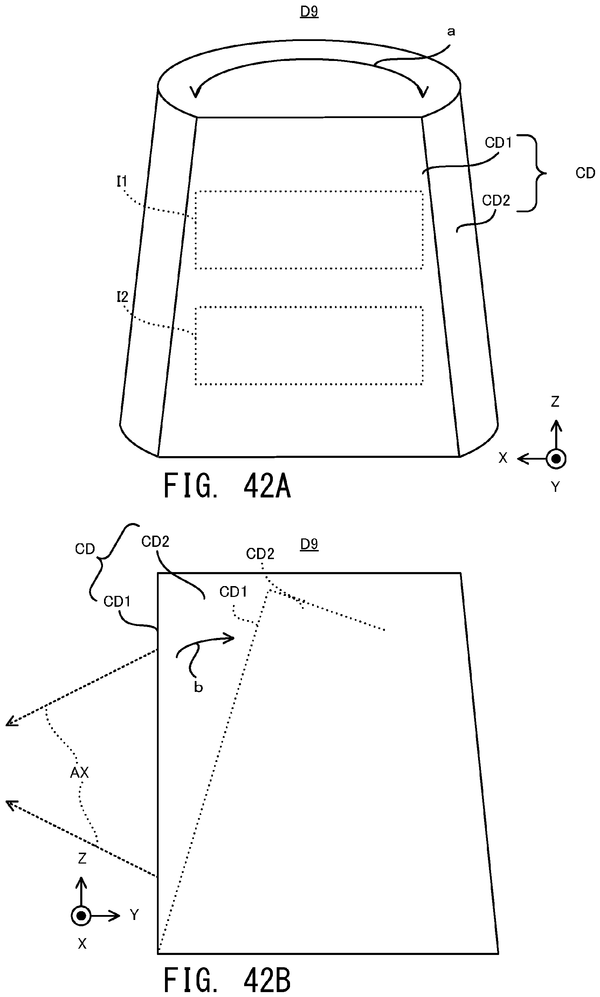

FIGs. 42A and 42B illustrates an external appearance of the lighting apparatus D9. FIG. 42A is a front view of the lighting apparatus D9 when viewed from the front, and FIG. 42B is a side view of the lighting apparatus D9 when viewed from a side surface thereof. As illustrated in FIG. 42A, the lighting apparatus D9 includes a cover member CD that accommodates the first illuminator I1 and the second illuminator I2, and that transmits light of a predetermined wavelength in a near-infrared area or an infrared area, as well as blocking visible light. The cover member CD includes a first member CD1 with a planar surface intersecting respective optical paths of the first light L1 and the second light L2, and a second member CD2 with a curved surface. On a transmission surface that transmits the illumination light IL and that intersects the optical path of the illumination light IL emitted by the lighting apparatus D9, the first member CD1 is disposed. As illustrated in FIG. 42B, the surface intersecting optical paths AX if the first light L1 and the second light L2 is a planar surface. Thus, the lighting apparatus D9 is capable of delivering each of the first light L1 and the second light L2 to a desired area.

### Operation of Information Processing System in Ninth Example Embodiment]

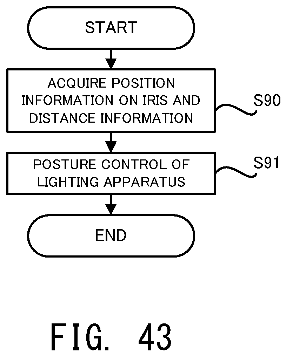

With reference to FIG. 43, a flow of an illumination control operation performed by the control unit 9 according to the ninth example embodiment will be described. FIG. 43 is a flowchart illustrating the flow of the illumination control operation performed by the control unit 9 according to the ninth example embodiment. In the ninth example embodiment, the control unit 9 may typically perform the illumination control operation illustrated in FIG. 43, before starting the operation of the step S108 in FIG. 24.

As illustrated in FIG. 43, at least one of the acquisition of the position information by the position information acquisition unit 211 and the acquisition of the distance information by the distance information acquisition unit 313 is performed (step S90). The posture control unit 920 controls a posture of the lighting apparatus D9 to change an inclination of the first member CD1 based on at least one of the positional information and the distance information (step S91). The iris camera CI may may continuously capture images of the target T after the distance to the target person P is determined to be less than or equal to the in-focus distance in the step S107 in FIG. 24, and the posture control unit 920 may control the posture of the lighting apparatus D9 to change the inclination of the first member CD1 based on at least one of the position information and the distance information, for each image capture.

In the step S91, for example, as illustrated by the arrow in FIG. 42A, the lighting apparatus D9 may rotate about the Z-axis direction. Furthermore, as illustrated by the arrow in FIG. 42B, the first member CD1 may be inclined and an angle to the Z-axis of the first member CD1 may be changed.

For example, let us consider a case where a plurality of lighting apparatuses D9 according to the ninth example embodiment are applied when the lighting apparatuses are disposed closed to each other, as in the first lighting apparatus D71 and the third lighting apparatus D73 as well as the second lighting apparatus D72 and the fourth lighting apparatus D74 according to the seventh example embodiment. As illustrated in FIGs. 42A and 42B, since a side back surface other than the first member CD1 of the lighting apparatus D9 is a curved surface, even when each lighting apparatus D9 changes the posture thereof, the lighting apparatuses D9 are hardly in contact with each other, and do not interfere with the illumination.

### Technical Effect of Information Processing System in Ninth Example Embodiment]

In the lighting apparatus D9 according to the ninth example embodiment, the transmission surface that transmits the illumination light is a planar surface, and it is therefore possible to illuminate the target T without distorting the illumination light IL. In the lighting apparatus D9 according to the ninth example embodiment, the side back surface other than the surface intersecting the optical path of the lighting apparatus D9 is a curved surface. Therefore, interference in the illumination, such as the lighting apparatuses being in contact with each other, does not occur even when each lighting apparatus D9 changes the posture thereof. Furthermore, since the control unit 9 according to the ninth example embodiment is capable of controlling the posture of the lighting apparatus D9, an area R illuminated by the lighting apparatus D9 may be enlarged. It is therefore possible to properly illuminate the target T independently of the position of the target T.

In addition, in some cases, the illumination light is reflected into the iris area due to a wide illumination area of the illumination light, and reflected light captured in the iris image may deteriorate the accuracy of the iris authentication. In contrast, since the information processing system according to each of the example embodiments described above enables a narrow illumination area, it is possible to reduce a possibility of deterioration in accuracy of the iris authentication caused by the reflection of the reflected light to the iris image.

### Supplementary Notes]

With respect to the example embodiment described above, the following Supplementary Notes are further disclosed.

### [Supplementary Note 1]

A lighting apparatus including:
a first illumination unit that irradiates first light toward a first area; and
a second illumination unit that is disposed on one side in a predetermined direction from the first illumination unit and that irradiates second light toward a second area located on another side in the predetermined direction from the first area.

### [Supplementary Note 2]

The lighting apparatus according to Supplementary Note 1, further including: a third illumination unit that is disposed on the one side in the predetermined direction from the first illumination unit and on the other side in the predetermined direction from the second illumination unit and that irradiates third light toward a third area located on the other side in the predetermined direction from the first area and on the one side in the predetermined direction from the second area.

### [Supplementary Note 3]

The lighting apparatus according to Supplementary Note 1, wherein
each of the first illumination unit and the second illumination unit includes a plurality of element illuminators arranged side by side,
a first element illuminator of the plurality of element illuminators irradiates first element light that constitutes a part of the first light, toward a first element area, and
a second element illuminator of the plurality of element illuminators that is disposed on one side in a cross direction intersecting the predetermined direction from the first element illuminator, irradiates second element light that constitutes another part of the first light, toward a second element area located on the other side in the cross direction from the first element area.

### [Supplementary Note 4]

The lighting apparatus according to Supplementary Note 1 or 2, wherein
each of the first light and the second light is light of a predetermined wavelength in a near-infrared area or an infrared area,
the lighting apparatus further includes a cover member that accommodates the first and second illumination units, and that transmits the light of the predetermined wavelength, as well as blocking visible light, and
the cover member includes a first member with a planar surface intersecting respective optical paths of the first light and the second light, and a second member with a curved surface.

### [Supplementary Note 5]

An information processing apparatus including:
a position information acquisition unit that acquires position information indicating a position of a target; and
an illumination control unit that
   controls a first illumination unit that is configured to irradiate first light toward a first area, such that the first illumination unit illuminates the target with the first light, in response to the target being located on one side in a predetermined direction from a predetermined position, and
   controls a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

### [Supplementary Note 6]

The information processing apparatus according to Supplementary Note 5, wherein the illumination control unit
controls a third illumination unit that is disposed on the one side in the predetermined direction from the first illumination unit and on the other side in the predetermined direction from the second illumination unit and that irradiates third light toward a third area located on the other side in the predetermined direction from the first area and on the one side in the predetermined direction from the second area, such that the third illumination unit illuminates the target with the third light, as well as controlling the first illumination unit such that the first illumination unit illuminates the target with the first light, in response to the target being located on the one side in the predetermined direction from the predetermined position, and
controls the third illumination unit such that the third illumination unit illuminates the target with the third light, as well as controlling the second illumination unit such that the second illumination unit illuminates the target with the second light, in response to the target being located on the one side in the predetermined direction from the predetermined position.

### [Supplementary Note 7]

The information processing apparatus according to Supplementary Note 5 or 6, wherein
each of the first and second illumination units includes a plurality of element illuminators,
the information processing apparatus further includes a distance information acquisition unit that acquires distance information indicating a distance from the first and second illumination units to the target, and
the illumination control unit controls which of the plurality of element illuminators is to be turned on, based on at least one of the distance and the position of the target.

### [Supplementary Note 8]

The information processing apparatus according to Supplementary Note 5 or 6, wherein
each of the first and second illumination units includes a plurality of element illuminators, and the elemental illuminators included in the first and second illumination units are arranged in a matrix,
the information processing apparatus further includes a distance information acquisition unit that acquires distance information indicating a distance from the first and second illumination units to the target, and
the illumination control unit controls which column of the plurality of element illuminators is to be turned on, based on the distance.

### [Supplementary Note 9]

The information processing apparatus according to Supplementary Note 5 or 6, further including a brightness detection unit that detects brightness of the target in response to the target being illuminated, wherein
the illumination control unit controls illuminator intensity of at least one of the first light and the second light, based on the brightness.

### [Supplementary Note 10]

An information processing system including:
an imaging unit that captures an image of a target passing through a passageway;
a lighting apparatus that illuminates the target with illumination light, the lighting apparatus including a first illumination unit that irradiates first light toward a first area, and a second illumination unit that is disposed on one side in a predetermined direction from the first illumination unit and that irradiates second light toward a second area located on another side in the predetermined direction from the first area; and
a gate provided in the passageway, the gate being opened and closed based on an authentication result of the target based on an image capture result by the imaging unit.

### [Supplementary Note 11]

The information processing system according to Supplementary Note 10, further including:
a first lighting apparatus that is disposed on one side of the passageway and that illuminates the target with first illumination light serving as the illumination light and a second lighting apparatus that is disposed on another side of the passageway and that illuminates the target with second illumination light serving as the illumination light, as the lighting apparatus; and
an illumination control unit that controls the first and second lighting apparatuses to illuminate the target with the first light and the second light, respectively, in response to the imaging unit capturing an image.

### [Supplementary Note 12]

The information processing system according to Supplementary Note 11, further including a determination unit that determines whether or not the target is wearing eyeglasses, wherein
the illumination control unit
switches an operating mode of the first and second lighting apparatuses to an eyeglass wearing mode in which the first and second lighting apparatuses illuminate the target with the first illumination light and the second illumination light in different timing, respectively, in response to the target wearing the eyeglasses, and
switches the operating mode of the first and second lighting apparatuses to an eyeglass not-wearing mode in which the first and second lighting apparatuses illuminate the target with the first illumination light and the second illumination light in same timing, respectively, in response to the target not wearing the eyeglasses.

### [Supplementary Note 13]

The information processing system according to Supplementary Note 11, wherein
based on at least one of image capture timing of image capture of the target by the imaging unit, and an exposure time of the image capture,
the illumination control unit
   switches the operating mode of the first and second lighting apparatuses between a discontinuous mode in which the target is discontinuously illuminated with the first or second illumination light based on the image capture timing and a continuous mode in which the target is continuously illuminated with the first or second illumination light independently of the image capture timing of the target.

[Supplementary Note 14]

The information processing system according to Supplementary Note 10 or 11, wherein
the target is allowed to pass through at least one of a first passageway, a second passageway adjacent to one side of the first passageway, and a third passageway adjacent to another side of the first passageway, as the passageway,
the information processing system includes, as the lighting apparatus:
   a first lighting apparatus that is disposed on the one side of the first passageway and that illuminates the target passing through the first passageway with first illumination light serving as the illumination light;
   a second lighting apparatus that is disposed on the other side of the first passageway and that illuminates the target passing through the first passageway with second illumination light serving as the illumination light;
   a third lighting apparatus that is disposed on the one side of the first passageway and that illuminates the target passing through the second passageway with third illumination light serving as the illumination light; and
   a fourth lighting apparatus that is disposed on the other side of the first passageway and that illuminates the target passing through the third passageway with fourth illumination light serving as the illumination light.

### [Supplementary Note 15]

The information processing system according to Supplementary Note 14, wherein
the first lighting apparatus is provided on a side in a moving direction of the target from the third lighting apparatus, and
the fourth lighting apparatus is provided on a side in a moving direction of the target from the second lighting apparatus.

### [Supplementary Note 16]

The information processing system according to Supplementary Note 10, further including:
an authentication unit that authenticates the target by using an image generated by the imaging unit capturing an image of the target; and
an illumination control unit that controls which of a plurality of element illuminators included in the lighting apparatus is to be turned on, based on an authentication result of the target.

### [Supplementary Note 17]

The information processing system according to Supplementary Note 10, further including:
a reflecting surface capable of reflecting light from the target toward the imaging unit; and
an illumination control unit that controls which of element illuminators included in the lighting apparatus is to be turned on, based on a direction of the reflecting surface.

### [Supplementary Note 18]

The information processing system according to Supplementary Note 10 or 11, wherein
the lighting apparatus illuminates the target with light of a predetermined wavelength in a near-infrared area or an infrared area, as the illumination light, and
the imaging unit captures an iris image of the target illuminated with the light of the predetermined wavelength.

### [Supplementary Note 19]

The information processing system according to Supplementary Note 10 or 11, further including:
an acquisition unit that acquires at least one of position information indicating a position of the target and distance information indicating a distance from the lighting apparatus to the target; and
a posture control unit that controls a posture of the lighting apparatus to change an inclination of the first member CD1 based on at least one of the position information and the distance information, for each image capture. an inclination of a transmission surface that transmits the illumination light and that intersects an optical path of the illumination light emitted by the lighting apparatus, based on at least one of the position information and the distance information.

### [Supplementary Note 20]

An information processing method including:
acquiring position information indicating a position of a target;
controlling a first illumination unit that is configured to irradiate first light toward a first area, such that the first illumination unit illuminates the target with the first light, in response to the target being located on one side in a predetermined direction from a predetermined position; and
controlling a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

### [Supplementary Note 21]

A recording medium on which a computer program that allows a computer to execute an information processing method is recorded, the information processing method including:
acquiring position information indicating a position of a target;
controlling a first illumination unit that is configured to irradiate first light toward a first area, such that the first illumination unit illuminates the target with the first light, in response to the target being located on one side in a predetermined direction from a predetermined position; and
controlling a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

At least a part of the constituent components of each of the example embodiments described above can be combined with at least another part of the constituent components of each of the example embodiments described above, as appropriate. A part of the constituent components of each of the example embodiments described above may not be used. Furthermore, to the extent permitted by law, the disclosures of all documents (e.g., publications) cited in this disclosure above are incorporated into a part of the description of this disclosure.

This disclosure is not limited to the examples described above. This disclosure is allowed to be changed, if desired, without departing from the essence or spirit of this disclosure which can be read from the claims and the entire identification. A lighting apparatus, an information processing apparatus, an information processing system, an information processing method, and a recording medium with such changes are also intended to be within the technical scope of this disclosure.

### Description of Reference Codes

SYS1, SYS2, SYS3, SYS4, SYS5, SYS7 Information processing system
D1, D2, D3, D4, D5, D6, D7, D8, D9 Lighting apparatus
I1 First illuminator
I2 Second illuminator
I3 Third illuminator
CD Cover member
CD1 First member
CD2 Second member
1, 2, 3 Information processing apparatus
4, 5, 6, 8, 9 Control unit
11, 211 Position information acquisition unit
12, 212 Illuminator control unit
313 Distance information acquisition unit
414 Authentication unit
415 Mirror control unit
416 Gate control unit
517 Determination unit
618 Image capture information acquisition unit
819 Brightness detection unit
920 Posture control unit
C Imaging unit
G Gate unit
G5 Lane
T Target
P Target person
C31 Reflecting surface

## Claims

1. A lighting apparatus comprising:
a first illumination unit that irradiates first light toward a first area; and
a second illumination unit that is disposed on one side in a predetermined direction from the first illumination unit and that irradiates second light toward a second area located on another side in the predetermined direction from the first area.

2. The lighting apparatus according to claim 1, further comprising: a third illumination unit that is disposed on the one side in the predetermined direction from the first illumination unit and on the other side in the predetermined direction from the second illumination unit and that irradiates third light toward a third area located on the other side in the predetermined direction from the first area and on the one side in the predetermined direction from the second area.

3. The lighting apparatus according to claim 1, wherein
each of the first illumination unit and the second illumination unit includes a plurality of element illuminators arranged side by side,
a first element illuminator of the plurality of element illuminators irradiates first element light that constitutes a part of the first light, toward a first element area, and
a second element illuminator of the plurality of element illuminators that is disposed on one side in a cross direction intersecting the predetermined direction from the first element illuminator, irradiates second element light that constitutes another part of the first light, toward a second element area located on the other side in the cross irradiateion from the first element area.

4. The lighting apparatus according to claim 1 or 2, wherein
each of the first light and the second light is light of a predetermined wavelength in a near-infrared area or an infrared area,
the lighting apparatus further comprises a cover member that accommodates the first and second illumination units, and that transmits the light of the predetermined wavelength, as well as blocking visible light, and
the cover member includes a first member with a planar surface intersecting respective optical paths of the first light and the second light, and a second member with a curved surface.

5. An information processing apparatus comprising:
a position information acquisition unit that acquires position information indicating a position of a target; and
an illumination control unit that
controls a first illumination unit that is configured to irradiate first light toward a first area, such that the first illumination unit illuminates the target with the first light, in response to the target being located on one side in a predetermined direction from a predetermined position, and
controls a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

6. The information processing apparatus according to claim 5, wherein the illumination control unit
controls a third illumination unit that is disposed on the one side in the predetermined direction from the first illumination unit and on the other side in the predetermined direction from the second illumination unit and that irradiates third light toward a third area located on the other side in the predetermined direction from the first area and on the one side in the predetermined direction from the second area, such that the third illumination unit illuminates the target with the third light, as well as controlling the first illumination unit such that the first illumination unit illuminates the target with the first light, in response to the target being located on the one side in the predetermined direction from the predetermined position, and
controls the third illumination unit such that the third illumination unit illuminates the target with the third light, as well as controlling the second illumination unit such that the second illumination unit illuminates the target with the second light, in response to the target being located on the one side in the predetermined direction from the predetermined position.

7. The information processing apparatus according to claim 5 or 6, wherein
each of the first and second illumination units includes a plurality of element illuminators,
the information processing apparatus further comprises a distance information acquisition unit that acquires distance information indicating a distance from the first and second illumination units to the target, and
the illumination control unit controls which of the plurality of element illuminators is to be turned on, based on at least one of the distance and the position of the target.

8. The information processing apparatus according to claim 5 or 6, wherein
each of the first and second illumination units includes a plurality of element illuminators, and the elemental illuminators included in the first and second illumination units are arranged in a matrix,
the information processing apparatus further comprises a distance information acquisition unit that acquires distance information indicating a distance from the first and second illumination units to the target, and
the illumination control unit controls which column of the plurality of element illuminators is to be turned on, based on the distance.

9. The information processing apparatus according to claim 5 or 6, further comprising a brightness detection unit that detects brightness of the target in response to the target being illuminated, wherein
the illumination control unit controls illuminator intensity of at least one of the first light and the second light, based on the brightness.

10. An information processing system comprising:
an imaging unit that captures an image of a target passing through a passageway;
a lighting apparatus that illuminates the target with illumination light, the lighting apparatus including a first illumination unit that irradiates first light toward a first area, and a second illumination unit that is disposed on one side in a predetermined direction from the first illumination unit and that irradiates second light toward a second area located on another side in the predetermined direction from the first area; and
a gate provided in the passageway, the gate being opened and closed based on an authentication result of the target based on an image capture result by the imaging unit.

11. The information processing system according to claim 10, further comprising:
a first lighting apparatus that is disposed on one side of the passageway and that illuminates the target with first illumination light serving as the illumination light and a second lighting apparatus that is disposed on another side of the passageway and that illuminates the target with second illumination light serving as the illumination light, as the lighting apparatus; and
an illumination control unit that controls the first and second lighting apparatuses to illuminate the target with the first light and the second light, respectively, in response to the imaging unit capturing an image.

12. The information processing system according to claim 11, further comprising a determination unit that determines whether or not the target is wearing eyeglasses, wherein
the illumination control unit
switches an operating mode of the first and second lighting apparatuses to an eyeglass wearing mode in which the first and second lighting apparatuses illuminate the target with the first illumination light and the second illumination light in different timing, respectively, in response to the target wearing the eyeglasses, and
switches the operating mode of the first and second lighting apparatuses to an eyeglass not-wearing mode in which the first and second lighting apparatuses illuminate the target with the first illumination light and the second illumination light in same timing, respectively, in response to the target not wearing the eyeglasses.

13. The information processing system according to claim 11, wherein
based on at least one of image capture timing of image capture of the target by the imaging unit, and an exposure time of the image capture,
the illumination control unit
switches the operating mode of the first and second lighting apparatuses between a discontinuous mode in which the target is discontinuously illuminated with the first or second illumination light based on the image capture timing and a continuous mode in which the target is continuously illuminated with the first or second illumination light independently of the image capture timing of the target.

14. The information processing system according to claim 10 or 11, wherein
the target is allowed to pass through at least one of a first passageway, a second passageway adjacent to one side of the first passageway, and a third passageway adjacent to another side of the first passageway, as the passageway,
the information processing system comprises, as the lighting apparatus:
a first lighting apparatus that is disposed on the one side of the first passageway and that illuminates the target passing through the first passageway with first illumination light serving as the illumination light;
a second lighting apparatus that is disposed on the other side of the first passageway and that illuminates the target passing through the first passageway with second illumination light serving as the illumination light;
a third lighting apparatus that is disposed on the one side of the first passageway and that illuminates the target passing through the second passageway with third illumination light serving as the illumination light; and
a fourth lighting apparatus that is disposed on the other side of the first passageway and that illuminates the target passing through the third passageway with fourth illumination light serving as the illumination light.

15. The information processing system according to claim 14, wherein
the first lighting apparatus is provided on a side in a moving direction of the target from the third lighting apparatus, and
the fourth lighting apparatus is provided on a side in a moving direction of the target from the second lighting apparatus.

16. The information processing system according to claim 10, further comprising:
an authentication unit that authenticates the target by using an image generated by the imaging unit capturing an image of the target; and
an illumination control unit that controls which of a plurality of element illuminators included in the lighting apparatus is to be turned on, based on an authentication result of the target.

17. The information processing system according to claim 10, further comprising:
a reflecting surface capable of reflecting light from the target toward the imaging unit; and
an illumination control unit that controls which of element illuminators included in the lighting apparatus is to be turned on, based on a direction of the reflecting surface.

18. The information processing system according to claim 10 or 11, wherein
the lighting apparatus illuminates the target with light of a predetermined wavelength in a near-infrared area or an infrared area, as the illumination light, and
the imaging unit captures an iris image of the target illuminated with the light of the predetermined wavelength.

19. The information processing system according to claim 10 or 11, further comprising:
an acquisition unit that acquires at least one of position information indicating a position of the target and distance information indicating a distance from the lighting apparatus to the target; and
a posture control unit that controls a posture of the lighting apparatus to change an inclination of the first member CD1 based on at least one of the position information and the distance information, for each image capture. an inclination of a transmission surface that transmits the illumination light and that intersects an optical path of the illumination light emitted by the lighting apparatus, based on at least one of the position information and the distance information.

20. An information processing method comprising:
acquiring position information indicating a position of a target;
controlling a first illumination unit that is configured to irradiate first light toward a first area, such that the first illumination unit illuminates the target with the first light, in response to the target being located on one side in a predetermined direction from a predetermined position; and
controlling a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.

21. A recording medium on which a computer program that allows a computer to execute an information processing method is recorded, the information processing method including:
acquiring position information indicating a position of a target;
controlling a first illumination unit that is configured to irradiate first light toward a first area, such that the first illumination unit illuminates the target with the first light, in response to the target being located on one side in a predetermined direction from a predetermined position; and
controlling a second illumination unit that is disposed on the one side in the predetermined direction from the first illumination unit and that irradiates second light toward a second area located on another side in the predetermined direction from the first area, such that the second illumination unit illuminates the target with the second light, in response to the target being located on the other side in the predetermined direction from the predetermined position.
